# FASCICULE DE BREVET EUROPEEN

(11) **EP 2 398 812 B1**
(45) Date de publication et mention de la délivrance du brevet: **14.08.2013**
(21) Numéro de dépôt: 10710875.5
(22) Date de dépôt: 18.02.2010
(51) Int. Cl.: C07F 7/28

(54) **MATERIAU SOLIDE HYBRIDE INORGANIQUE-ORGANIQUE A BASE DE TITANE, SON PROCEDE DE PREPARATION ET UTILISATIONS**
FESTES ANORGANISCH-ORGANISCHES HYBRIDMATERIAL AUF TITANBASIS, VERFAHREN ZU DESSEN HERSTELLUNG UND DESSEN ANWENDUNGEN
TITANIUM BASED INORGANIC-ORGANIC HYBRID SOLID MATERIAL, METHOD FOR PREPARING SAME AND USES THEREOF

(30) Priorité: 18.02.2009 FR 0900744
(43) Date de publication de la demande: 28.12.2011
(73) Titulaire: Université Pierre et Marie Curie - Paris 6, 75005 Paris (FR)
(72) Inventeur: SERRE, Christian, F-78370 Plaisir (FR); FEREY, Gérard, F-75015 Paris (FR); SANCHEZ, Clément, F-91440 Bures sur Yvette (FR); ROZES, Laurence, F-91800 Brunoy (FR); DAN, Meenakshi, Cleveland, Ohio 44114 (US); FROT, Théo, F-75014 Paris (FR)
(74) Mandataire: Goulard, Sophie
(86) Numéro de dépôt international: PCT/FR2010/050271
(87) Numéro de publication internationale: WO 2010/094889

(56) Documents cités:
- WO-A-2007/118888
- WO-A-2008/082087
- SERRE C. ET AL: "Synthesis, Stucture and Properties of related Microporous N,N'-Piperazinebismethylenephosphonates of aluminum and titanium" CHEMISTRY OF MATERIALS, vol. 18, 2006, pages 1451-1457, XP002545857 cité dans la demande
- JASMINA HAFIZOVIC CAVKA ET AL: "A New Zirconium Inorganic Building Brick Forming Metal Organic Frameworks with Exceptional Stability" J. AM. CHEM. SOC,, vol. 130, no. 42, 26 septembre 2008 (2008-09-26), pages 13850-13851, XP002536712 cité dans la demande
- ROZES L., COCHET S., FROT T., FORNASIERI G., SASSOYE C., POPALL M., SANCHEZ C.: "Titanium Oxo-Clusters: Versatile Nano-Objects for the Design of Hybrid Compounds" MATERIALS RESEARCH SOCIETY SYMPOSIUM PROCEEDINGS, vol. 1007, 2007, page S15-02, XP002584202

## Description

La présente invention est relative à un matériau se présentant sous la forme de réseaux tridimensionnels cristallins hybrides, en particulier à base de titane, à leur procédé de préparation, ainsi qu'à leur utilisation, notamment pour le stockage de gaz tels que H₂, CO₂ ou CH₄, l'adsorption de liquides, la séparation de liquides ou de gaz, des applications en optique ou en catalyse, dans le domaine biomédical (libération contrôlée de médicaments), cosmétique, etc...

Les réseaux métallo-organiques ou « Metal-Organic Framework » (MOF) sont des polymères de coordination, de charpente hybride inorganique-organique comprenant des ions métalliques et des ligands organiques coordinés aux ions métalliques. Ces matériaux sont organisés en réseau mono-, bi- ou tridimensionnels dans lesquels les entités métalliques sont reliées entre elles par des ligands espaceurs de façon périodique. La charpente de ces solides possède à la fois des parties inorganiques et des parties organiques dont les cavités peuvent être occupées par des molécules d'eau ou par des molécules organiques faciles à extraire sans détérioration du squelette. Cela se traduit néanmoins par une stabilité thermique inférieure à celle des solides poreux inorganiques classiques (typiquement 300°C) ; en contrepartie, la densité des phases hybrides s'en trouve fortement diminuée, typiquement entre 0,2 et 1 g.cm⁻³, avec pour conséquence des surfaces spécifiques (BET) jusqu'à 4500 m².g⁻¹, et des volumes poreux (< 2 cm³.g⁻¹) considérablement augmentés.

Une autre particularité de certains solides hybrides est l'existence d'une flexibilité du réseau, supérieure à celle rencontrée pour les phases purement inorganiques. Cela est dû généralement à l'utilisation de ligands organiques flexibles (chaînes aliphatiques), ou à la contraction des pores liée au départ des molécules encapsulées au sein des pores.

Ces matériaux ont une structure cristalline, sont le plus souvent poreux et offrent de nombreuses applications industrielles potentielles telles que le stockage de gaz, l'adsorption de liquides, la séparation de liquides ou de gaz, la catalyse, la libération contrôlée de médicament, etc. On peut citer par exemple le brevet US 7,279,517 qui décrit un procédé réactionnel faisant intervenir un système de catalyse comprenant un matériau MOF à base de zinc. Ce même matériau est également utilisé pour le stockage de gaz dans le brevet US 6,929,679.

S'il existe des MOFs avec presque tous les éléments de la classification périodique, des éléments alcalino-terreux (Ca, Mg) aux métaux de transition (Sc, Fe, V, Cr, Co, Ni, Zn), éléments 3p (Al, Ga, In) aux terres rares (La, Ce, Eu...Y) et actinides (U), le nombre de MOFs poreux à base de titane est encore très restreint.

Parmi l'ensemble des MOFs à base de titane synthétisés à ce jour, on peut notamment mentionner plusieurs types de diphosphonates de titane à charpente ouverte.

Parmi de tels disphosphonates, seul un MOF de titane obtenu par voie hydrothermale à partir de TiO₂ et d'acide di-N,N'-pipérazinebisméthylène-phosphinique (MIL-91(Ti) : Serre C. et al., Chem. Mater., 2006, 18, 1451-1457) présente une porosité accessible à l'azote avec une surface spécifique (BET) proche de 300 m².g⁻¹ et une taille de pore de l'ordre de 4 Å. Des MOFs à base de 1,4-butanediol ou de phtalocyanine ont également été répertoriés récemment sans que ces derniers ne présentent de surface spécifique ou de porosité notable.

Si les premiers polycarboxylates de zirconium (IV) ont été décrits récemment, notamment dans l'article de J. Hafizovic Cavka et al., J. A. C. S., 2008, 130, 13850-13851, il n'y a, à ce jour, aucun polycarboxylate de titane (IV) cristallisé décrit dans la littérature.

La demande internationale WO2007/11888 fait état de la synthèse de MOFs carboxylates à base de titane ou de zirconium par voie solvothermale en utilisant un précurseur de titane tel que par exemple TiOSO₄, H₂O et l'acide téréphtalique dans le DMF pur, à une température de 130°C pendant 18 heures. Ce procédé ne permet cependant pas d'accéder à des MOFs polycarboxylates à base de titane présentant une structure cristalline et une porosité satisfaisantes.

Or, la présence d'atomes de titane au sein de matériaux solide poreux est intéressante dans la mesure où elle peut conférer aux matériaux MOFs les incorporant des propriétés d'oxydo-réduction intéressantes en optique ou en catalyse.

Par exemple, des MOFs photochromes pourraient être obtenus par réaction d'un MOF au titane à la lumière. En effet, sous l'action d'une irradiation lumineuse les espèces Ti⁴⁺ sont réduites en Ti³⁺. La présence de ces espèces réduites conduit à la formation d'un composé à valence mixte qui présente une coloration caractéristique.

De plus, de part sa non toxicité avérée (DL₅₀>12g /kg), le titane peut être utilisé en cosmétique ou en biologie.

Il serait donc intéressant de pouvoir disposer de MOFs à base de titane ayant une grande surface spécifique pour des applications dans le domaine du stockage/séparation des gaz, de la catalyse, voire des applications biologiques ou cosmétiques.

Le but de la présente invention est donc de pourvoir à des MOFs de titane ayant une grande surface spécifique (porosité accessible à l'azote), ainsi qu'à un procédé de synthèse simple, fiable et peu coûteux, permettant d'accéder à ce type de matériau.

La présente invention a pour objet un matériau solide hybride inorganique-organique à base de titane, caractérisé en ce qu'il présente une structure cristalline pseudo-cubique et qu'il est constitué exclusivement d'unités de formule (I) suivante :

TiₐO_{b}(OH)_{c}[(⁻OOC)-X-#]_{d} (I)

dans lesquelles :
- X est un espaceur organique et représente une chaîne aliphatique linéaire ou ramifiée, saturée ou insaturée, ayant de 2 à 12 atomes de carbone ; un groupement aromatique hydrocarboné mono, bi- ou tricyclique substitué ou non par un ou plusieurs substituants R indépendamment choisis parmi un atome d'halogène et les groupements amino, nitro, hydroxyle, trifluoroalkyle en C₁-C₄ et alkyle en C₁-C₄; un groupement benzophénone ; un groupement hétéroaromatique mono- ou bicyclique dans lequel le ou les cycles comportent 5 ou 6 chaînons, ledit groupement contenant au moins un hétéroatome choisi parmi l'azote et le soufre et étant substitué ou non par un ou plusieurs substituants R indépendamment choisis parmi un atome d'halogène et les groupements amino, nitro, hydroxyle, trifluoroalkyle en C₁-C₄ et alkyle en C₁-C₄ ;
- a, et b, identiques ou différents, sont des nombres entiers variant de 1 à 16 inclusivement ;
- c et d, identiques ou différents, sont des nombres entiers variant de 1 à 32 inclusivement ;
- les indices a, b, c et d respectent la relation 4a = 2b + c + d ;
- les atomes de titane forment une brique élémentaire purement inorganique constituée d'oxo-complexes de titane ;
- # est le point par lequel deux unités de formule (I) sont reliées entre elles ; # représente une liaison covalente entre un atome de carbone appartenant à l'espaceur X et l'atome de carbone d'un groupement carboxylate COO⁻ d'une autre unité de formule (I) et dans laquelle les deux atomes d'oxygène du groupement carboxylate appartiennent respectivement à deux oxo-complexes de titane octaédriques adjacents d'une brique élémentaire de ladite autre unité de formule (I) ;
   lesdites unités de formule (I) formant ensemble une structure tridimensionnelle et délimitant des cavités de diamètre libre de 4 à 40 Å environ (pores ou cages) accessibles par des fenêtres triangulaires de dimensions de 4 à 15 Å environ.

Selon l'invention, on entend par « structure tridimensionnelle », une succession ou répétition tridimensionnelle d'unités de formule (I) tel qu'on l'entend de façon conventionnelle dans le domaine des matériaux MOFs, que l'on caractérise également comme « polymères organométalliques ».

Le matériau solide conforme à l'invention, ci-après dénommé MOF de titane, a l'avantage d'être à base de titane et d'avoir une structure cristalline contrôlée et hautement organisée, avec une topologie et une distribution particulières qui procurent à ce matériau des propriétés spécifiques.

L'organisation spatiale cristalline du matériau solide de la présente invention est à la base des caractéristiques et propriétés particulières de ce matériau, et régit notamment la taille des cavités (ou pores) qui a une influence sur la surface spécifique du matériau et sur les capacités de stockage des gaz ou d'adsorption des liquides par exemple. La taille des pores peut ainsi être ajustée par le choix de l'espaceur organique X.

Parmi les chaînes aliphatiques définies pour X, on peut mentionner les chaînes alkyles linéaires telles que les chaînes éthyle, propyle, butyle, pentyle, hexyle, heptyle, octyle, nonyle, décyle, undécyle et dodécyle ; les chaînes alcènes linéaires telles que éthylène, propylène, butylène, pentylène, hexylène, heptylène, octylène nonylène, décylène, undécylène et dodécylène ; les chaînes alcynes telles que éthyne, propyne, butyne, pentyne, hexyne, heptyne, octyne, nonyne, décyne, undécyne et dodécyne. Parmi de telles chaînes, les chaînes alkyle en C₁-C₄ et alcènes ou alcynes en C₂-C₄ sont préférées.

Parmi les groupements aromatiques hydrocarbonés définis pour X, on peut notamment citer les groupements phénylène ; chloro-phénylène ; bromophénylène ; aminophénylène ; nitrophénylène ; mono-, di- ou tetraméthylphénylène ; mono- ou diéthénylphénylène ; mono- ou dihydroxyphénylène ; biphénylène ; diphényldiazène ; naphtalène et anthracène.

Parmi les hétérocycles définis pour X, on peut citer les cycles thiophène, bithiophène, pyridine, bipyridine et pyrazine.

Selon une forme de réalisation préférée de l'invention, la sous-unité [⁻OOC-X-#] est choisie parmi les groupements de formules (II-1) à (II-13) suivantes : 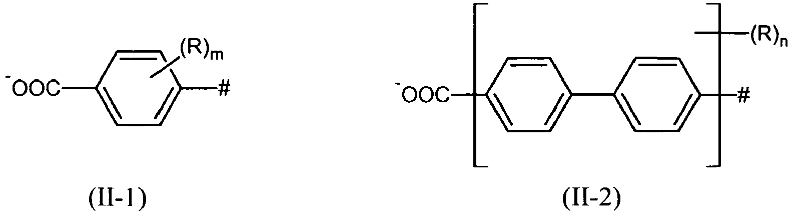 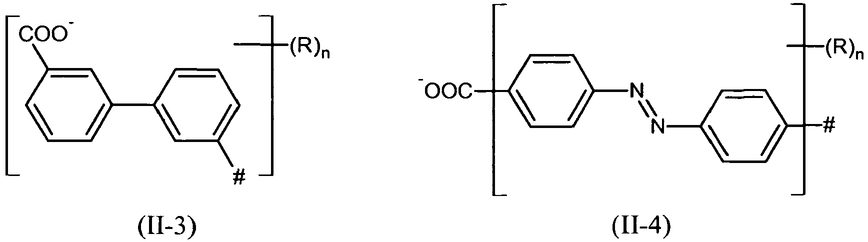 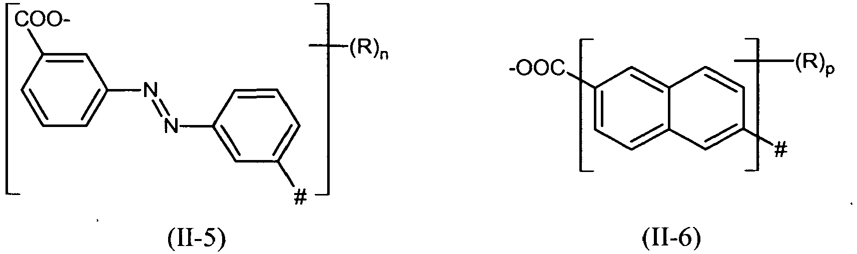 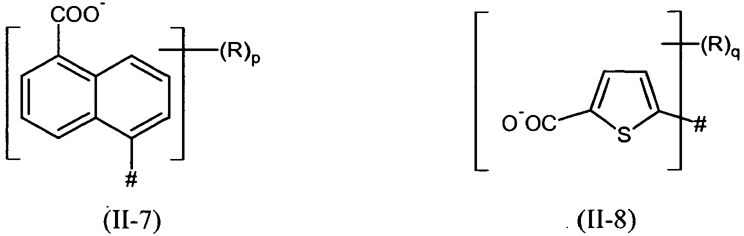 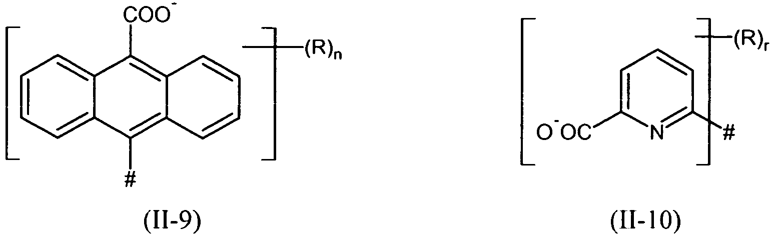 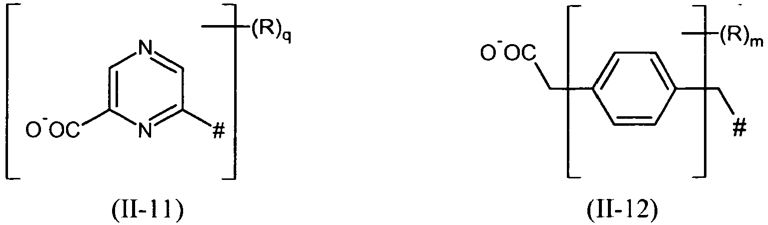 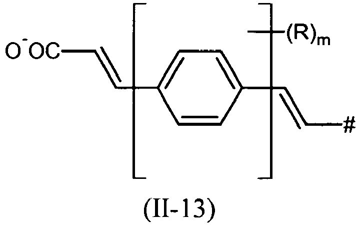 dans lesquelles :
- R est un atome d'halogène, un groupement amino, nitro, hydroxyle, trifluoroalkyle en C₁-C₄ ou alkyle en C₁-C₄ ;
- m est un nombre entier allant de 0 à 4,
- n est un nombre entier allant de 0 à 8,
- p est un nombre entier allant de 0 à 6,
- q est un nombre entier allant de 0 à 2,
- r est un nombre entier allant de 0 à 3.

Parmi les sous-unités de formule (II-1), le phényl-1-carboxylate, le phényl-2-amino-1-carboxylate, le phényl-2,5-dihydroxy-1-carboxylate et le phényl-2-chloro-1-carboxylate sont particulièrement préférés.

Parmi les sous-unités de formule (II-4), on peut citer l'azobenzène-4-carboxylate, l'azobenzène-3,3'-dichloro-4-carboxylate et l'azobenzène-3,3'-dihydroxy-4-carboxylate.

Parmi les sous-unités de formule (II-8), on peut citer le thiophène-2-carboxylate et le 3,4-dihydroxy-thiophène-2-carboxylate.

Selon une forme de réalisation particulièrement préférée de l'invention, la sous-unité [⁻OOC-X-#] est choisie parmi le phényl-1-carboxylate, le phényl-2-amino-1-carboxylate et le thiophène-2-carboxylate.

Parmi les unités de formule (I) telles que définies précédemment, on peut tout particulièrement citer les sous-unités de formule (I-1) suivante :

Ti₈O₈(OH)₄[(⁻OOC)-X-#]₁₂ (I-1)

dans lesquelles :
- X et # sont els que définis précédemment ;
- les atomes de titane forment une brique élémentaire purement inorganique constituée de 8 oxo-complexes de titane octaédriques comportant chacun un atome de titane central entouré par 6 atomes d'oxygène, lesdits oxo-complexes de titane octaédriques étant reliés entre eux soit par une arête commune, soit par un sommet commun, dans les deux cas par l'intermédiaire de ponts oxo -O- ou hydroxo -OH- ; lesdites briques étant connectées entre elles dans les trois dimensions de l'espace par les espaceurs organiques X ; étant entendu que chacune des briques est reliée à 12 espaceurs organiques par l'intermédiaire des groupements carboxylates COO⁻dans lesquels chacun des deux atomes d'oxygène fait partie intégrante de deux oxo-complexes de titane adjacents.

Dans les sous-unités de formule (I-1), une brique élémentaire (ou roue d'oxo-complexes de titane octaédriques) contient donc 36 atomes d'oxygène connectés aux huit atomes de titane alternativement soit par une arête commune mettant en jeu deux ponts oxo ou hydroxo soit par un sommet commun mettant en jeu un seul pont oxo ou hydroxo, soit par l'intermédiaire des groupements carboxylate.

Ainsi qu'on l'a vu précédemment, le matériau solide conforme à la présente invention comprend des cavités de diamètre libre de 4 à 40 Å environ. De manière préférée, les cavités ont un diamètre libre de 5 à 12,6 Å environ.

Le matériau solide conforme à l'invention a une surface spécifique (BET) de 200 à 6000 m²/g environ, de préférence de 200 à 1800 m²/g.

Dans le cadre de l'invention, le volume poreux signifie le volume de gaz accessible pour les molécules de gaz et/ou de liquide et correspond au volume intérieur de ce que l'on dénomme indifféremment « cavités », « cages », et « pores » dans le texte de la présente demande.

Le matériau solide conforme à l'invention peut avoir un volume poreux de 0,1 à 3 cm³/g environ, plus particulièrement de 0,5 à 0,7 cm³/g environ.

Grâce à ces propriétés, le matériau solide conforme à la présente invention peut être utilisé comme support de catalyseur pour la réalisation de réactions chimiques catalysées en phase hétérogène, comme matériau de stockage/séparation de gaz, comme matrice pour l'encapsulation de principes actifs (médicaments, cosmétiques) ou bien encore comme matériau photochrome pour le stockage d'information ou l'impression laser ou bien encore comme matériau indicateur d'oxygène.

A titre d'exemples non limitatifs, le matériau solide conforme à la présente invention plus particulièrement être utilisé :
- Pour l'adsorption des gaz à effet de serre (CO₂, CH₄), en présence de contaminants divers (eau, N₂, CO, H₂S...), dans des procédés de capture de fumées d'usine (aciéries, cimenteries, centrales thermiques...), d'unités de production de méthane ou d'hydrogène à partir de la combustion de la biomasse ou de la gazéification du charbon. Le faible coût de production de ces matériaux, combiné à leur non toxicité et leur bonne stabilité (thermique, résistance à l'humidité ou au sulfure de dihydrogène) en font des candidats de choix pour ce type d'applications à grande échelle ;
- Pour la séparation des fluides (gaz, vapeurs, liquides), telle que la séparation des composés aromatiques (isomères du xylène), des alcanes branchés (indice d'octane), la purification des carburants etc... ;
- En biologie / cosmétique, pour l'adsorption ou l'encapsulation de principes actifs (pharmaceutiques ou cosmétiques) d'intérêt dans le but soit de les libérer de manière contrôlée afin de disposer de doses à un niveau efficace sur le plan thérapeutique pendant une période adéquate, soit de les protéger vis-à-vis du milieu extérieur (de l'humidité par exemple). A ce titre, le titane est un métal peu toxique (Dose Létale (DL⁵⁰) supérieure à 5 g/kg) au même titre que les acides carboxyliques en général, ce qui confère à ces solides (carboxylates de titane) une faible toxicité *a priori* très intéressante pour ce type d'application. Les propriétés d'adsorption dans l'UV du titane peuvent s'appliquer au domaine des substances anti-UV utilisées en cosmétique, en particulier avec un choix adéquat d'espaceur organique adsorbant lui aussi dans ce domaine de longueur d'onde. Les matériaux solides conformes à l'invention peuvent également être utilisés pour l'encapsulation de toxines, pour la détoxification (pour éliminer *a posteriori* des toxines dans le corps), ou pour purifier des fluides biologiques (urine, sang...).

Le matériau solide conforme à l'invention peut être préparé en conditions solvothermales dans un mélange d'au moins deux solvants, soit par voie directe à partir de précurseurs de titane de type alcoxyde de titane et d'au moins un acide dicarboxylique, soit par voie indirecte à partir d'entités préformées telles que des oxo-complexes de titane et d'au moins un acide dicarboxylique.

Ainsi la présente invention a également pour objet un procédé de préparation d'un matériau solide hybride inorganique-organique à base de titane tel que défini précédemment, caractérisé en ce qu'il comporte les étapes suivantes :
1) dans une première étape on prépare un mélange réactionnel comprenant :
   i) au moins un précurseur de titane choisi parmi les alcoxydes de titane de formule (III) suivante :

      Ti(OR₁)₄ (III)

      dans laquelle R₁ est un radical alkyle linéaire ou ramifié comportant de 1 à 4 atomes de carbone ou au moins un oxo-complexe de titane de formule (IV) suivante :

      TiₓO_{y}(OR₂)_{z}(OOCR₃)_{w} (IV)

      dans laquelle :
      - R₂ représente un atome d'hydrogène, un radical alkyle en C₁-C₆ linéaire ou ramifié ou un cycle phényle éventuellement substitué par un ou plusieurs radicaux choisis parmi un atome d'halogène, les radicaux alkyle en C₁-C₄ et alcène en C₂-C₃ ;
      - R₃ représente un radical alkyle en C₁-C₄ linéaire ou ramifié, un radical trihalogénoalkyle en C₁-C₄ ou un cycle phényle,
      - x est un nombre entier allant de 2 à 18,
      - y est un nombre entier allant de 1 à 27,
      - z est un nombre entier allant de 0 à 32,
      - w est un nombre entier allant de 0 à 16,
         et dans lequel les atomes de titane forment une brique élémentaire constituée d'un coeur purement inorganique d'oxo-complexes de titane en coordinence octaédrique comportant chacun un atome de titane central entouré par 6 atomes d'oxygène, lesdits oxo-complexes de titane octaédriques étant reliés entre eux soit par une arête commune, soit par un sommet commun, dans les deux cas par l'intermédiaire de ponts oxo -O- ou hydroxo -OH- ; lesdites briques étant entourées par des ligands organiques de type alcoolate (OR₂) et/ou carboxylate (OOCR₃).
   ii) au moins un acide dicarboxylique de formule (V) suivante :

      HOOC-X'-COOH (V)

      dans laquelle X' représente une chaîne aliphatique linéaire ou ramifiée, saturée ou insaturée, ayant de 2 à 12 atomes de carbone ; un groupement benzophénone ou un groupement aromatique hydrocarboné mono, bi- ou tricyclique substitué ou non par un ou plusieurs substituants R' indépendamment choisis parmi un atome d'halogène et les groupements amino, nitro, hydroxyle, trifluoroalkyle en C₁-C₄ et alkyle en C₁-C₄ ;
   iii) un mélange d'au moins deux solvants organiques comprenant au moins un solvant S1 choisi parmi les alcools en C₁-C₄, l'alcool benzylique et l'alcool chlorobenzylique et au moins un solvant S2 choisi parmi le N.N-diméthylformamide (DMF), le N,N-diéthylformamide (DEF), le diméthylsulfoxyde (DMSO), l'éthylèneglycol, le dioxane, l'acétonitrile, l'acétone, le tetrahydrofurane (THF), la pyridine et la N-méthylpyrrolidone ;
2) dans une deuxième étape, on porte le mélange réactionnel ainsi obtenu à une température de 70 à 200°C environ, pendant environ 4 à 72 heures, jusqu'à obtention d'un précipité correspondant au matériau solide attendu, puis
3) dans une troisième étape, le mélange réactionnel est refroidi jusqu'à la température ambiante,
4) dans une quatrième étape, on sépare le matériau solide du mélange de solvants organiques ;
   étant entendu que lorsque le matériau solide est constitué d'unités de formule (I) dans lesquelles X est un groupement hétéroaromatique mono- ou bicyclique dans lequel le ou les cycles comportent 5 ou 6 chaînons éventuellement substitués, ledit groupement contenant au moins un hétéroatome choisi parmi l'azote et le soufre, alors ledit procédé comprend en outre les étapes supplémentaires suivantes :
5) une cinquième étape de préparation d'une dispersion du matériau solide issu de la quatrième étape dans au moins un solvant organique polaire, en présence d'au moins un acide dicarboxylique de formule (VI) suivante :

   HOOC-X"-COOH (VI)

   dans laquelle X" représente un groupement hétéroaromatique mono- ou bicyclique dans lequel le ou le cycles comportent 5 ou 6 chaînons, ledit groupement contenant au moins un hétéroatome choisi parmi l'azote et le soufre et étant substitué ou non par un ou plusieurs substituants R indépendamment choisis parmi un atome d'halogène et les groupements amino, nitro, hydroxyle, trifluoroalkyle en C₁-C₄ et alkyle en C₁-C₄,
6) une sixième étape, au cours de laquelle on porte la dispersion ainsi obtenue à une température de 100 à 150°C pendant une durée de 4 heures à 4 jours, ce qui entraîne la formation d'un précipité correspondant au matériau solide attendu, puis
7) une septième étape au cours de laquelle on laisse la température revenir à température ambiante, et
8) une huitième étape de séparation du matériau solide ainsi obtenu du ou des solvants organiques.

Selon une forme de réalisation préférée de ce procédé, les précurseurs de formule (III) sont choisis parmi l'éthoxyde de titane, l'isopropoxyde de titane, le n-propoxyde de titane et le butoxyde de titane. Parmi de tels précurseurs, l'isopropoxyde de titane est particulièrement préféré.

Les oxo-complexes de titane de formule (IV) utilisables selon le procédé de l'invention sont par exemple décrits dans l'article de Rozes L. et al., Monatshefte für Chemie, 2006, 137, 501-528. Parmi les oxo-complexes de titane de formule (IV), ci-dessus, on peut en particulier citer Ti₁₆O₁₆(OCH₂CH₃)₃₂ et Ti₈O₈(OOCR₃)₁₆ dans lequel R₃ est tel que défini précédemment (un radical alkyle linéaire ou ramifié en C₁-C₄, un radical trihalogénoalkyle en C₁-C₄ ou un cycle phényle).

Les acides dicarboxyliques de formule (V) sont bien évidemment choisis parmi les acides dicarboxyliques correspondant aux sous-unités [⁻OOC-X-#] du matériau solide que l'on souhaite préparer, dans la limite toutefois de la définition donnée à X' ci-dessus. Il n'est en effet *a priori* pas possible d'accéder directement au travers de la première étape à des matériaux dans lesquels X est un hétérocycle à 5 ou 6 chaînons. Dans ce cas, le procédé conforme à l'invention doit comporter les étapes 5 à 8 au cours desquelles on procède à l'échange des espaceurs X' par des espaceurs X" tels que définis ci-dessus.

L'acide dicarboxylique de formule (V) peut ainsi en particulier être choisi parmi l'acide benzène-1,4-dicarboxylique (acide téréphtalique), l'acide 2-amino-benzène-1,4-dicarboxylique (acide aminotéréphtalique), l'acide 2-nitro-benzène-1,4-dicarboxylique, l'acide 2-chloro-benzène-1,4-dicarboxylique, l'acide 2-bromo-benzène-1,4-dicarboxylique, l'acide 2,5-dihydroxy-benzène-1,4-dicarboxylique, l'acide 2-méthyl-benzène-1,4-dicarboxylique, l'acide 2,5-diméthyl-benzène-1,4-dicarboxylique, l'acide diphényl-4,4'-dicarboxylique, l'acide diphényl-3,3'-dicarboxylique, l'acide 4,4'-diazène-1,2-diyldibenzoïque, l'acide 3,3'-diazène-1,2-diyldibenzoïque, l'acide naphtalène-2,6-dicarboxylique, l'acide naphtalène-1,5-dicarboxylique, l'acide 1,4-phénylènediacétique, l'acide 1,4-phénylénediacrylique et l'acide 4,4'-benzophénone-dicarboxylique.

Parmi de tels acides, l'acide benzène-1,4-dicarboxylique, l'acide 2,5-dihydroxy-benzène-1,4-dicarboxylique et l'acide 2-amino-benzène-1,4-dicarboxylique sont particulièrement préférés.

Au sein du mélange réactionnel, le rapport molaire alcoxyde de titane de formule (III) ou oxo-complexe de titane de formule (IV) / acide dicarboxylique de formule (V) varie de préférence de 0,1 à 2 environ et encore plus préférentiellement de 0,5 à 1 environ.

Parmi les alcools en C₁-C₄ (S1) utilisés lors de la première étape du procédé, le méthanol est particulièrement préféré.

Au sein du mélange de solvants organiques utilisés lors de la première étape du procédé, le rapport volumique S1/S2 varie de préférence de 0,05 à 0,95 environ, et encore plus préférentiellement de 0,10 à 0,90 environ.

De façon optionnelle, le mélange réactionnel utilisé lors de la première étape peut en outre renfermer un ou plusieurs additifs choisis parmi les acides monocarboxyliques tels que par exemple l'acide acétique et les bases organiques telles que par exemple les alkylamines comme la triéthylamine. Les inventeurs ont en particulier remarqué que la présence d'un acide monocarboxylique tel que l'acide acétique permet d'améliorer la cristallinité du matériau solide conforme à l'invention et/ou le rendement de la réaction. La présence de tels additifs peut aussi permettre de diminuer la durée de la synthèse.

Lorsqu'ils sont utilisés ces additifs représentent de préférence de 1 à 10 % en masse et encore plus préférentiellement de 1 à 5 % en masse par rapport à la masse totale du mélange réactionnel.

Selon une forme de réalisation préférée, la deuxième étape du procédé est réalisée à une température de 100 à 150°C environ.

La durée de la deuxième étape variera en fonction de la température utilisée étant entendu que plus la température est élevée, plus cette durée est courte. De façon préférée, la durée de la deuxième étape varie de 8 à 15 heures environ.

Selon une forme de réalisation particulière du procédé conforme à l'invention, l'étape 2) est réalisée à l'aide d'un four à micro-ondes. Dans ce cas, la durée de la deuxième peut être réduite et varier de 1 minute à 60 minutes. Cette méthode de chauffage du mélange réactionnel permet par ailleurs d'accéder à des matériaux possédant une taille de particules très inférieure à celle des particules du matériau obtenu lorsque le chauffage est réalisé en étuve.

Lors de la troisième étape, le refroidissement du mélange réactionnel jusqu'à la température ambiante est de préférence réalisé à une vitesse de refroidissement de 1°C/heure à 40°C/heure environ.

Les solvants polaires utilisables lors de la cinquième étape peuvent notamment être choisis parmi les mélanges d'au moins deux solvants organiques S1 et S2 comprenant au moins un solvant S1 choisi parmi les alcools en C₁-C₄, l'alcool benzylique et l'alcool chlorobenzylique et au moins un solvant S2 choisi parmi le N,N-diméthylformamide (DMF), le N,N-diéthylformamide (DEF), le diméthylsulfoxyde (DMSO), l'éthylèneglycol, le dioxane, l'acétonitrile, l'acétone, le tetrahydrofurane (THF), la pyridine et la N-méthylpyrrolidone.

Ainsi qu'on l'a vu précédemment, lorsque le matériau solide conforme à la présente invention est constitué d'unités de formule (I) dans lesquelles X est un hétérocycle aromatique à 5 ou 6 chaînons contenant au moins un hétéroatome choisi parmi l'azote et le soufre, il est indispensable de procéder aux étapes 5) à 8) telles que définies ci-dessus, au cours desquelles l'espaceur X' est échangé avec un espaceur X" tels que définis précédemment.

Lors de la cinquième étape, le matériau solide issu de la quatrième étape est obtenu avec un rendement de 50 à 75 % environ.

Parmi les acides dicarboxyliques de formule (VI), on peut en particulier citer l'acide thiophène-2,5-dicarboxylique, l'acide pyridine-2,5-dicarboxylique, l'acide pyrazine-2,5-dicarboxylique, l'acide pyridine-2,6-dicarboxylique, l'acide pyrazyne-2,3-dicarboxylique et l'acide pyrazine-2,6-dicarboxylique. Parmi ces acides, l'acide thiophène-2,5-dicarboxylique est particulièrement préféré.

Le rapport molaire matériau solide issu de la quatrième étape / acide dicarboxylique de formule (VI) lors de la cinquième étape varie de préférence de 1 à 20 environ et encore plus préférentiellement de 5 à 10 environ.

Selon une forme de réalisation préférée du procédé de l'invention, la sixième étape est réalisée pendant une durée de 8 à 15 heures environ.

Les quatrième et huitième étapes de séparation du matériau solide du mélange de solvants organique peuvent être réalisées par toute méthode de séparation connue de l'homme du métier parmi lesquelles la filtration est préférée.

Lorsque la synthèse est terminée, le matériau solide est de préférence lavé, soit très rapidement de manière statique, soit par redispersion dans un solvant à température ambiante sous agitation, par exemple avec un solvant organique tel que par exemple le DMF, puis séché par toute technique de séchage appropriée et connue de l'homme du métier. Cette étape de séchage permet d'éliminer toute trace de solvant et/ou d'acide. Elle peut notamment être réalisée par calcination du matériau solide sous air ou sous vide, à une température de 100 à 275°C pendant une durée de 3 à 48 heures, de préférence de 10 à 15 heures.

La présente invention est illustrée par les exemples de réalisation suivants, auxquels elle n'est cependant pas limitée.

### EXEMPLES

Dans les exemples qui suivent, les structures des matériaux obtenus ont été déterminées à partir de leur diffractogramme de poudre aux rayons X (diffractogramme RX selon la méthode Rietveld) sur un Appareil Bruker D5000.

Les mailles cristallographiques ont été obtenues à l'aide du logiciel Dicvol (A. Boultif, et al. J. Appl. Crystallogr., 1991, 24, 987) et l'affinement par contraintes de maille réalisé grâce au logiciel Fullprof (Rodriguez-Carvajal, J. in "Collected Abstracts of Powder Diffraction Meeting", Toulouse, France 1990, 127) et son interface graphique WinPLOTR (Roisnel, T. et al., In "Abstracts of the 7th European Powder Diffraction Conference", Barcelona, Spain 2000, 71). La position atomique de la plupart des atomes constituant les structures des matériaux obtenus a été déterminée par méthode directe grâce au programme Expo (Altomare, A et al., J. Appl. Crystallogr., 1999, 32, 339). La position des atomes résiduels ainsi que des molécules d'eau libres a été déterminée grâce au programme SHELXL-97 (University of Göttingen, Germany, 1997). Les positions atomiques ont ensuite été affinées dans Fullprof toujours à l'aide de l'interface graphique WinPLOTR. Des contraintes de distances et d'angles entre les atomes (distances : Ti-O, C-C et C-O ; angles O-Ti-O et O-C-O, C-C-C) ont été appliquées durant l'affinement.

Les analyses thermogravimétriques ont été réalisées à l'aide d'un analyseur thermogravimétrique commercialisé sous la référence TA 2050 par la société TA Instruments ou d'un analyseur STA6000 de la société Perkin Elmer, sous flux d'air (80 cm⁻³.min⁻¹), avec une vitesse de chauffe de 3°C/minute et en utilisant environ 5 mg de matériau.

Des analyses en spectroscopie infrarouge ont été effectuées sur un spectromètre commercialisé sous la dénomination Nicolet 750, en utilisant des pastilles de KBr contenant le matériau à analyser à l'état de trace.

Les mesures de surface spécifique ont été faites par des techniques d'adsorption-désorption d'azote à l'aide d'un appareil commercialisé sous la dénomination Micromeritics ASAP 2010, sur environ 50 mg de matériau préalablement activé sous vide primaire (10⁻³ Torr) pendant 15 heures) 200°C , le dépouillement étant fait par les méthodes de calcul Langmuir ou BET.

La stabilité thermique a été évaluée à l'aide d'un diffractomètre Bruker D5000 équipé d'une chambre en température Anton Paar.

### Exemple 1

### Synthèse de la phase TiBDC de composition Ti₈O₈(OH)₄[O₂C-C₆H₄-CO₂]₆

1,5 mmol d'acide 1,4-benzènedicarboxylique (250 mg) (Aldrich, 98 %) puis 1 mmol d'isopropoxyde de titane Ti(OiPr)₄ (0,3 ml) (Acros Organics, 98%), ont été introduits dans un corps en Téflon® contenant 5 ml d'un mélange constitué de 4,5 ml de diméthylformamide anhydre (Acros Organics) et de 0,5 ml de méthanol (Aldrich, 99,9%). Le mélange réactionnel a été agité pendant 5 minutes à température ambiante.

Le corps en Téflon® a ensuite été introduit dans un corps métallique PAAR puis mis à l'étuve à 150°C pendant 15 heures. Après retour à température ambiante, le matériau attendu sous forme d'un solide a été récupéré par filtration, lavé à l'acétone deux fois et séché à l'air. Le solvant contenu dans les pores a été éliminé par calcination du solide à 200°C sous air pendant 12 heures.

Les données cristallographiques et paramètres d'affinement structural du matériau obtenu sont donnés dans le tableau 1 ci-après :

**TABLEAU 1**

| | |
|---|---|
| Formule chimique brute (phase sèche, sans l'eau libre) | Ti₁₆O₇₂C₉₆H₆₄ |
| Masse molaire (g.mol⁻¹) | 3135 |
| Densité calculée (g.cm⁻³) (phase sèche) | 0.81 |
| Symétrie cristalline | Orthorhombique |
| Groupe d'espace | *I 4*/*m m m* (n°139) |
| *a* (Å) | 18,654(1) |
| *c* (Å) | 18,144(1) |
| *V* (Å3) | 6313,9(1) |
| *Z* | 4 |
| Longueur d'onde λ (Cu K_{α}) | 1,54059 ; 1,54439 |
| χ=K_{α2}/K_{α1} | 0,5 |
| Température (K) | 296 |
| Gamme angulaire 2θ (°) | 5-80 |
| **Nombre de réflections (pics de Bragg)** | 662 |
| Nombre d'atomes indépendants | 20 |
| Nombre de paramètres d'intensité | 37 |
| Nombre de paramètres de profil | 10 |
| Nombre de contraintes de distances et angles | 35 |
| *R*_{P} | 8 |
| *R*_{WP} | 10,9 |
| *R*_{Bragg} | 10,4 |
| Paramètre d'agitation thermique global | 3,9(1) |
| Fonction de profil | Pseudo-Voigt |
| Fond continu | Expérimental (32 points) |
| Nombre de paramètres d'asymétrie | 2 |

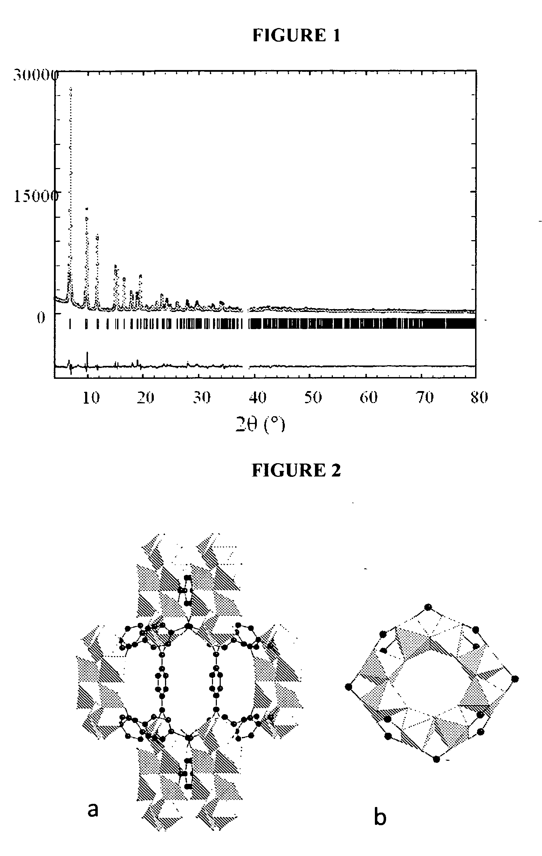

Le diagramme de diffraction aux RX est représenté sur la figure 1 annexée sur laquelle l'intensité (exprimée en unités arbitraires) est fonction de l'angle de diffraction en degrés. Sur cette figure, les points noirs correspondent aux points expérimentaux ; les points gris correspondent aux points calculés ; les traits noirs correspondent aux pics de Bragg ; et le courbe noire la plus basse correspond au diagramme de différence entre les points expérimentaux et les points calculés.

La structure cristallographique du matériau obtenu est représentée de façon schématique sur la figure 2 annexée, sur laquelle on a représenté la structure cristalline du matériau selon l'axe a (ou b) (figure 2a) ainsi qu'une vue d'une roue d'octaèdres de titane (figure 2b, octaèdres de titane, atomes carbone : points noirs). Le matériau cristallise dans le groupe d'espace orthorhombique I 4/mmm (n°139) avec pour paramètres :
- *a* = 18,654 (1) Å,
- c = 18,144 (1) Å
- volume de maille : 6313,9 (6) Å³

Ce matériau est constitué d'octaèdres de titane TiO₅(OH) qui s'assemblent en agrégats (ou roues) de huit octaèdres connectés entre eux par des anions téréphtalates. Le tout délimite un solide poreux pseudo-cubique avec un réseau tridimensionnel de pores. On peut aussi décrire cette structure comme un assemblage « d'octaèdres » hybrides avec sur chaque sommet de chaque octaèdre une roue constituée de huit polyèdres de titane. Les fenêtres d'accès aux pores sont d'une dimension libre proche de 5 à 7 Angströms et deux types de cages sont présents, de dimensions proches de 6 et 13 Angströms respectivement.

Les coordonnées atomiques du matériau obtenu sont données dans le tableau 2 suivant (phase hydratée) :

**TABLEAU 2**

| **Atome** | **Site de Wickoff** | **Taux d'occupation** | **x/a** | **y/b** | **z/c** |
|---|---|---|---|---|---|
| Ti | 16*l* | | 0,20830 | 0,07400 | 1/2 |
| O1 | 16*l* | | 0,31110 | 0,05800 | 1/2 |
| O2 | 16*n* | | 0,18190 | 0 | 0,42650 |
| O3 | 32*o* | | 0,22590 | 0,14420 | 0,42680 |
| O4 | 8*h* | | 0,10740 | 0,10740 | 1/2 |
| C1 | 8*j* | | 0,35070 | 0 | 1/2 |
| C2 | 8*j* | | 0,42650 | 0 | 1/2 |
| C3 | 16*l* | | 0,46320 | 0,07050 | 1/2 |
| C4 | 16*m* | | 0,19400 | 0,19400 | 0,40230 |
| C5 | 16*m* | | 0,22250 | 0,22250 | 0,32090 |
| C6 | 32*o* | | 0,20150 | 0,28760 | 0,28980 |
| Ow1 ^{[a]} | *8h* | | 0,17590 | 0,17590 | 0 |
| Ow2 | 16*m* | | 0,09180 | 0,09180 | 0,25400 |
| Ow3 | 16*n* | | 0,40490 | 0 | 0,26520 |
| Ow4 | 4*e* | | 0 | 0 | 0,56540 |
| Ow5 | 16*m* | | 0,10650 | 0,10650 | 0,09520 |
| Ow6 | 32*o* | 50% | 0,24080 | 0,03420 | 0,08380 |
| Ow7 | 16*n* | 77% | 0,23510 | 0 | 0,22370 |
| Ow8 | 4*e* | | 0 | 0 | 0,17900 |
| Ow10 | 2*a* | | | 0 | 0 |

| | | | | | |
|---|---|---|---|---|---|
| ^{[a]} : Dans ce tableau, les molécules d'eau sont notées Owi (i = 1 à 10) et ne font pas partie, à proprement parlé, de la structure du matériau car elles ne font que remplir ses pores lorsqu'il est exposé à l'air ambiant. | | | | | |

Les principales distances interatomiques, exprimées en Angströms, sont données dans le tableau 3 ci-après :

**TABLEAU 3**

| | | | |
|---|---|---|---|
| Ti | O3 | x, y, z | 1,89 (1) |
| | O3 | x, y, 1-z | 1,89(1) |
| | O1 | x, y, z | 1,941 (1) |
| | O2 | x, y, z | 1,98 (1) |
| | O2 | x, -y, 1-z | 1,98 (1) |
| | O4 | x, y, z | 1,98 (1) |
| C1 | O1 | x, -y, 1-z | 1,31 (1) |
| | O1 | x, y, z | 1,31 (1) |
| | C2 | x, y, z | 1,41 (1) |
| C2 | C1 | x, y, z | 1,41 (1) |
| | C3 | x, -y, 1-z | 1,48 (1) |
| | C3 | x, y, z | 1,48 (1) |
| C3 | C3 | 1-x, y, 1-z | 1,37 (1) |
| | C2 | x, y, z | 1,48 (1) |
| C4 | O3 | y, x, z | 1,19 (1) |
| | O3 | x, y, z | 1,19 (1) |
| | C5 | x, y, z | 1,65 (1) |
| C5 | C6 | x, y, z | 1,40 (1) |
| | C6 | y, x, z | 1,40 (1) |
| | C4 | x, y, z | 1,65 (1) |
| C6 | C5 | x, y, z | 1,40 (1) |
| | C6 | 0.5-y, 0.5-x, 0.5-z | 1,47 (1) |

### Exemple 2

### Synthèse de la phase Ti-NH₂BDC de composition Ti₈O₈(OH)₄[O₂C-C₆H₃(NH₂)-CO₂]₆

Le Ti-NH₂BDC a été préparé selon le procédé indiqué ci-dessus à l'exemple 1, en utilisant comme produit de départ 1,5 mmol d'acide 2-aminotéréphtalique (270 mg) (Aldrich, 98 %), 0,67 mmol d'isopropoxyde de titane Ti(OiPr)₄ (0,2 ml) (Acros Organics, 98%), et 5 ml d'un mélange constitué de 2,5 ml de diméthylformamide anhydre (Acros Organics) et de 2,5 ml de méthanol (Aldrich, 99,9%).

Le corps en Téflon ® a ensuite été introduit dans un corps métallique PAAR puis mis à l'étuve à 100°C pendant 15 heures. Après retour à température ambiante, le matériau attendu a été obtenu sous la forme d'un solide qui a été est récupéré par filtration, lavé à l'acétone deux fois et séché à l'air. Le solvant contenu dans les pores est retiré par calcination du solide à 200°C sous air pendant 12 heures.

Les données cristallographiques et paramètres d'affinement structural du matériau obtenu sont donnés dans le tableau 4 ci-après :

**TABLEAU 4**

| | |
|---|---|
| Formule chimique brute (phase sèche, sans l'eau libre) | Ti₁₆O₇₂N₄C₉₆H₇₆ |
| Masse molaire (g.mol⁻¹) | 3315 |
| Densité calculée (g.cm⁻³) (phase sèche) | 0,86 |
| Symétrie cristalline | Orthorhombique |
| Groupe d'espace | *I 4*/*m m m* (n°139) |
| *a* (Å) | 18.673(1) |
| *c* (Å) | 18,138(1) |
| V (Å3) | 6324.5(1) |
| *Z* | 4 |
| Longueur d'onde λ (Cu K_{α}) | 1,54059 ; 1,54439 |
| χ=K_{α2}/K_{α1} | 0,5 |
| Température (K) | 296 |
| Gamme angulaire 2θ (°) | 5 - 80 |
| **Nombre de réflections (pics de Bragg)** | 644 |
| Nombre d'atomes indépendants | 23 |
| Nombre de paramètres d'intensité | 43 |
| Nombre de paramètres de profil | 10 |
| Nombre de contraintes de distances et angles | 35 |
| *R*_{P} | 11,9 |
| *R*_{WP} | 15,5 |
| *R*_{Bragg} | 13,6 |
| Paramètre d'agitation thermique global | 2,9(1) |
| Fonction de profil | Pseudo-Voigt |
| Fond continu | Expérimental (35 points) |
| Nombre de paramètres d'asymétrie | 2 |

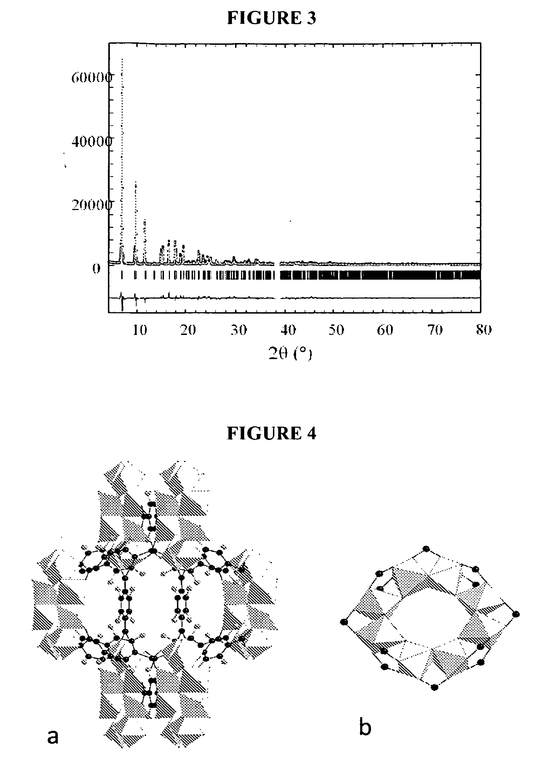

Le diagramme de diffraction aux RX du matériau obtenu est représenté sur la figure 3 annexée sur laquelle l'intensité (en unités arbitraires) est fonction de l'angle de diffraction (en degrés). Sur cette figure, les points noirs correspondent aux points expérimentaux ; les points gris correspondent aux points calculés ; les traits noirs correspondent aux pics de Bragg ; et le courbe noire la plus basse correspond au diagramme de différence entre les points expérimentaux et les points calculés.

La structure cristallographique du matériau obtenu est schématisée sur la figure 4 annexée, sur laquelle on a représenté la structure cristalline du matériau selon l'axe a (ou b) (figure 4a), ainsi qu'une vue d'une roue d'octaèdres de titane (atomes de carbone : points noirs ; atomes d'azote : points gris). Le matériau cristallise dans le groupe d'espace orthorhombique 14/mmm (n°139) avec pour paramètres :
- *a*= 18.673(1) Å,
- c = 18.139(1) Å,
- volume de maille : 6324.5(1) Å3.

Ce matériau est constitué d'octaèdres d'oxyde de titane TiO₅(OH) qui s'assemblent en agrégats (ou roues) de huit octaèdres connectés entre eux par des anions 2-aminotéréphtalates (figure 4a et 4b). Le tout délimite un solide poreux pseudo-cubique avec un réseau tridimensionnel de pores. On peut aussi décrire la structure comme un assemblage « d'octaèdres » hybrides avec sur chaque sommet de chaque octaèdre une roue constituée de huit polyèdres de titane. Les fenêtres d'accès aux pores sont d'une dimension libre proche de 5 à 6 Angströms et deux types de cages sont présents, de dimensions proches de 6 à 13 Angströms respectivement. Le groupement amino est désordonné sur quatre positions cristallographiques et une occupation de 25 % a été attribuée à l'atome d'azote du groupement amino.

Les coordonnées atomiques de ce matériau sont données dans le tableau 5 ci-après (phase hydratée) :

**TABLEAU 5**

| **Atome** | **Site de Wickoff** | **Taux d'occupation** | **x/a** | **y/b** | **z/c** |
|---|---|---|---|---|---|
| Ti | 16*l* | | 0.20487 | 0.07254 | 1/2 |
| O1 | 16*l* | | 0.31087 | 0.05903 | 1/2 |
| O2 | 16*n* | | 0.19180 | 0 | 0.42820 |
| O3 | 32*o* | | 0.22350 | 0.13977 | 0.42966 |
| O4 | *8h* | | 0.10766 | 0.10766 | 1/2 |
| C1 | 8*j* | | 0.34876 | 0 | 1/2 |
| C2 | 8*j* | | 0.42505 | 0 | 1/2 |
| C3 | 16*l* | | 0.46289 | 0.07112 | 1/2 |
| N1 | 16*l* | 25% | 0.40989 | 0.13166 | 1/2 |
| C4 | 16*m* | | 0.19137 | 0.19137 | 0.40513 |
| C5 | 16*m* | | 0.22438 | 0.22438 | 0.32907 |
| C6 | 32*o* | | 0.18500 | 0.28300 | 0.28828 |
| N2 | 32*o* | 25% | 0.32500 | 0.12500 | 0.33000 |
| Ow1^{[a]} | *8h* | | 0.17979 | 0.17979 | 0 |
| Ow2 | 16*m* | 81 % | 0.07677 | 0.07677 | 0.29254 |
| Ow3 | 16*n* | 83% | 0.38985 | 0 | 0.28589 |
| Ow4 | *2b* | | 0 | 0 | 1/2 |
| Ow5 | 16m | 79% | 0.09328 | 0.09328 | 0.08084 |
| Ow6 | 32*o* | 84% | 0.24910 | 0.06480 | 0.10202 |
| Ow7 | 16*n* | 84% | 0.24188 | 0 | 0.24106 |
| Ow8 | 4*e* | | 0 | 0 | 0.17823 |
| Ow9 | 4*e* | | 0 | 0 | 0.64063 |
| Ow10 | 2*a* | | 0 | 0 | 0 |

| | | | | | |
|---|---|---|---|---|---|
| ^{[a]} : Dans ce tableau, les molécules d'eau sont notées Owi (i = 1 à 10) et ne font pas partie, à proprement parlé, de la structure du matériau car elles ne font que remplir ses pores lorsqu'il est exposé à l'air ambiant. | | | | | |

Les principales distances interatomiques, exprimées en Angströms, sont données dans le tableau 6 ci-après :

**TABLEAU 6**

| | | | |
|---|---|---|---|
| Ti | O3 | x, y, z | 1.82(1) |
| | O3 | x, y, 1-z | 1.82(1) |
| | O2 | x, -y, 1-z | 1.90(1) |
| | O2 | x, y, z | 1.90(1) |
| | O4 | x, y, z | 1.93(1) |
| | O1 | x, y, z | 2.00(1) |
| C1 | O1 | x, -y, 1-z | 1.31(1) |
| | O1 | x, y, z | 1.31(1) |
| | C2 | x, y, z | 1.43(1) |
| C2 | C1 | x, y, z | 1.43(1) |
| | C3 | x, -y, 1-z | 1.50(1) |
| | C3 | x, y, z | 1.50(1) |
| C3 | C3 | 1-x, y, 1-z | 1.39(1) |
| | N1 | x, y, z | 1.50(1) |
| | C2 | x, y, z | 1.50(1) |
| N1 | C3 | x, y, z | 1.50(1) |
| C4 | O3 | y, x, z | 1.22(1) |
| | O3 | x, y, z | 1.22(1) |
| | C5 | x, y, z | 1.63(1) |
| C5 | C6 | x, y, z | 1.51(1) |
| | C6 | y, x, z | 1.51(1) |
| | C4 | x, y, z | 1.63(1) |
| C6 | C5 | x, y, z | 1.51(1) |
| | N2 | y, x, z | 1.56(1) |
| | C6 | 0.5-y, 0.5-x, 0.5-z | 1.63(1) |
| N2 | C6 | y, x, z | 1.56(1) |

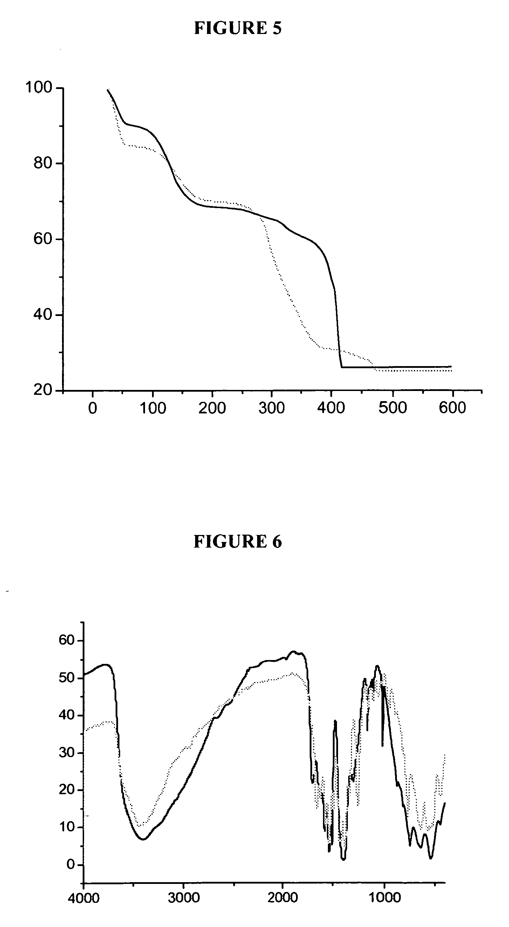

Les résultats de l'analyse thermogravimétrique du matériau préparé dans cet exemple, ainsi que ceux du matériau TiBDC préparé ci-dessus à l'exemple 1 on tété réalisées sur l'appareil TA2050 et sont donnés sur la figure 5 annexée. Sur cette figure, la masse (exprimée en pourcentage) est fonction de la température (exprimée en °C). La courbe noire correspond au TiBDC de l'exemple 1 et la courbe grise correspond au Ti-NH₂BDC de l'exemple 2.

Sur cette figure, on observe que le matériau TiBDC présente deux pertes de masse caractéristiques correspondant au départ successif des solvants contenus dans les pores, en premier lieu du méthanol entre 25°C et 100°C puis du DMF entre 100 et 200°C.

La dégradation du matériau intervient vers 400°C lors du départ de l'acide carboxylique constituant la charpente. Le solide résiduel est de l'anatase TiO₂.

Le même comportement thermique est observé pour le matériau Ti-NH₂BDC avec pour seule différence significative une dégradation de la charpente à une température inférieure (300°C). Le solide résiduel est également de l'anatase TiO₂.

Les spectres IR des matériaux TiBDC et Ti-NH₂BDC sont représentés sur la figure 6 annexée sur laquelle l'intensité (en unités arbitraires) est fonction de la longueur d'onde (en cm⁻¹). Sur cette figure, la courbe noire correspond au spectre du TiBDC de l'exemple 1 et la courbe grise correspond au spectre du Ti-NH₂BDC de l'exemple 2. On observe pour chacun des deux matériaux, les bandes caractéristiques des liaisons métal-carboxylates (bandes vers 1380 et 1600 cm⁻¹), une large bande vers 3400 cm⁻¹ correspondant aux molécules de solvants libres présentes dans les pores, ainsi que des bandes de structure de la partie minérale (O-Ti-O) aux faibles nombres d'ondes (400-800 cm⁻¹).

Les résultats des mesures de surface spécifique des matériaux TiBDC et Ti-NH₂BDC sont reportés dans le tableau 7 ci-après :

**TABLEAU 7**

| Matériau | Surface spécifique méthode BET (m².g⁻¹) | Surface spécifique méthode Langmuir (m².g⁻¹) | Volume microporeux (cm³.g⁻¹)* |
|---|---|---|---|
| TiBDC | 1550(20) | 1950(10) | 0,64(1) |
| Ti-NH₂BDC | 1200(20) | 1550(10) | 0,48(1) |

| | | | |
|---|---|---|---|
| (*) : calculé d'après la méthode t-plot | | | |

### Exemple 3

### Mise en évidence de l'importance du choix d'un mélange de solvants

Dans cet exemple, on a comparé l'effet du choix du milieu solvant sur la nature de matériaux synthétisés à partir d'isopropoxyde de titane et d'acide 1,4-benzènedicarboxylique.

Les synthèses ont été réalisées dans un milieu solvant pur (méthanol, DMF ou isopropanol) ou bien dans un mélange méthanol/DMF.

### a) Synthèse en milieu méthanol pur (exemple comparatif ne faisant pas partie de l'invention)

0,4 mmol d'acide 1,4-benzènedicarboxylique (60 mg) (Aldrich, 98 %) puis 0,35 mmol d'isopropoxyde de titane Ti(OiPr)₄ (0,1 ml) (Acros Organics, 98%), ont été introduits dans un corps en Teflon ® renfermant 3 ml de méthanol (Aldrich, 99.9%). Le mélange a été agité pendant 5 minutes à température ambiante. Le corps en Teflon ® a ensuite été introduit dans un corps métallique PAAR puis mis à l'étuve à 150°C pendant 15 heures. Après retour à température ambiante, le solide obtenu a été récupéré par filtration, lavé à l'acétone deux fois et séché à l'air.

### b) Synthèse en milieu diméthylformamide pur (exemple comparatif ne faisant pas partie de l'invention) :

1,0 mmol d'acide 1,4-benzènedicarboxylique (166 mg) (Aldrich, 98 %) puis 1 mmol d'isopropoxyde de titane Ti(OiPr)₄ (0,2 ml) (Acros Organics, 98%), ont été introduits dans un corps en Teflon ® renfermant 5 ml de DMF anhydre (Acros Organics) Le mélange a été agité pendant 5 minutes à température ambiante. Le corps en Teflon ® a ensuite été introduit dans un corps métallique PAAR puis mis à l'étuve à 150°C pendant 15 heures. Après retour à température ambiante, le solide a été récupéré par filtration, lavé à l'acétone deux fois et séché à l'air.

### c) Synthèse en milieu isopropanol pur (exemple comparatif ne faisant pas partie de l'invention) :

0,35 mmol d'acide 1,4-benzènedicarboxylique (60 mg) (Aldrich, 98 %) puis 0,5 mmol d'isopropoxyde de titane Ti(OiPr)₄ (0,1 ml) (Acros Organics, 98%), ont été introduits dans un corps en Teflon ® renfermant 5 ml d'isopropanol (Aldrich, 99 %). Le mélange a été agité pendant 5 minutes à température ambiante. Le corps en Téflon a ensuite été introduit dans un corps métallique PAAR puis mis à l'étuve à 150°C pendant 12 heures. Après retour à température ambiante, le solide a été récupéré par filtration, lavé à l'acétone deux fois et séché à l'air.

### d) Synthèse dans un mélange DMF-méthanol (exemple conforme à l'invention) :

1,5 mmol d'acide 1,4-benzènedicarboxylique (250 mg) (Aldrich, 98 %) puis 1 mmol d'isopropoxyde de titane Ti(OiPr)₄ (0,3 ml) (Acros Organics, 98%), ont été introduits dans un corps en Teflon ® renfermant 4,5 ml de DMF anhydre (Acros Organics) et 0,5 ml de méthanol (Aldrich, 99.9%). Le mélange a été agité pendant 5 minutes à température ambiante. Le corps en Teflon ® a ensuite été introduit dans un corps métallique PAAR puis mis à l'étuve à 150°C pendant 15 heures. Après retour à température ambiante, le solide a été récupéré par filtration, lavé à l'acétone deux fois et séché à l'air.

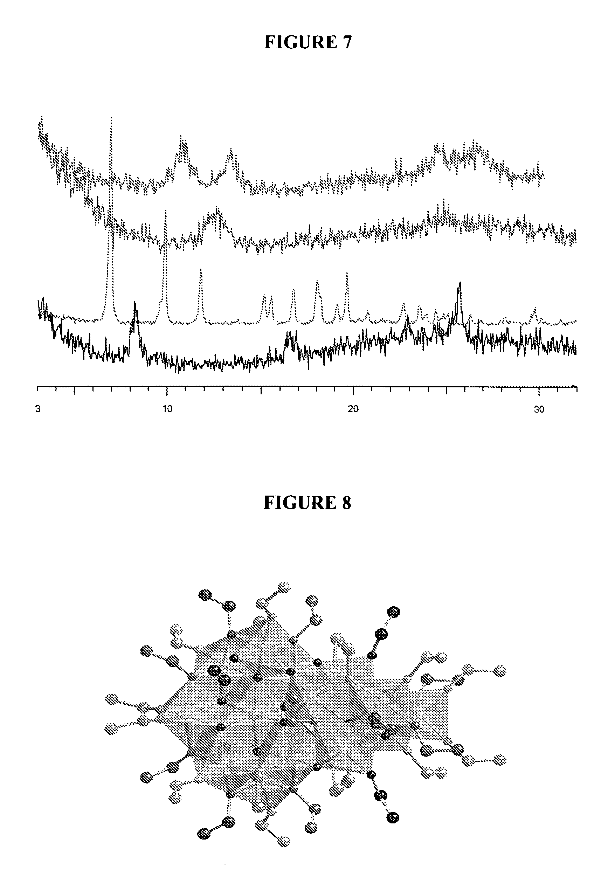

Les diagrammes de diffraction aux RX (λCu = 1,5406 Å) des poudres ainsi obtenues dans chacun des milieux solvant sont représentés sur la figure 7 annexée sur laquelle l'intensité (en unités arbitraires) est fonction de l'angle de diffraction (en degrés). Sur cette figure, la courbe la plus haute correspond à la synthèse effectuée dans le méthanol pur, la courbe suivante correspond à la synthèse effectuée dans l'isopropanol pur, et la courbe la plus basse correspond à la synthèse effectuée dans le DMF pur. La courbe située juste au dessus de la courbe la plus basse est très différente des trois autres et correspond à la synthèse effectuée dans le mélange méthanol/DMF. On constate que les matériaux obtenus en milieu solvant pur sont très mal cristallisés, leurs diffractogrammes aux RX est totalement différent de celui du matériau TiBDC obtenu ci-dessus à l'exemple 1 (voir figure 1 annexée) et de celui obtenu lorsque la synthèse est réalisée dans le mélange méthanol/DMF. Leurs pics de diffraction sont en outre situés aux plus grands angles, ce qui traduit une plus grande densité de réseau et donc une porosité moindre.

Toutes conditions étant identiques par ailleurs (nature des précurseurs, températures et temps de synthèse), ces essais démontrent que la nature de la phase formée dépend fortement du choix du solvant. L'utilisation d'un milieu réactionnel constitué d'un seul solvant, comme décrit par exemple dans la demande internationale WO 2007/118888 ne permet pas d'aboutir à un matériau conforme à l'invention. Seule l'utilisation d'un mélange constitué d'au moins deux solvants conformément au procédé de l'invention, tel que par exemple un mélange de méthanol et de diméthylformamide, permet d'obtenir un matériau TiBDC parfaitement organisé sous forme d'une phase poreuse tétragonale très bien cristallisée.

### Exemple 4

### Mise en évidence de l'importance du choix du précurseur de titane

Dans cet exemple, on a étudié l'effet du choix du précurseur de titane sur la structure des matériaux synthétisés. Les synthèses ont été réalisées dans un milieu DMF pur ou bien dans un mélange méthanol/DMF à partir de tétrachlorure de titane (précurseur de titane non conforme à l'invention) et d'acide 1,4-benzènedicarboxylique.

### a) Synthèse en milieu DMF pur

Cette synthèse a été réalisée selon le protocole décrit dans l'exemple 4 de la demande WO2007/118888.

52 mmol d'acide 1,4-benzènedicarboxylique (8,72 g) (Aldrich, 98 %) puis 52 mmol de tétrachlorure de titane TiCl₄ (10g) ont été introduits dans un ballon de 500 ml contenant 300 ml de DMF anhydre (Acros Organics). Le mélange réactionnel a été agité pendant 18 heures à 130°C jusqu'à obtention d'un précité. Le précipité a été récupéré par centrifugation puis lavé 3 fois avec 50 ml de DMF puis 3 fois par 50 ml de méthanol. Le précipité a ensuite été séché à 160°C pendant 16 heures.

Les analyses effectuées révèlent que les particules de la poudre obtenue sont peu poreuses (surface spécifique BET : 107 m²/g) et amorphes (RX).

### b) Synthèse en milieu DMF/méthanol

On a reproduit la synthèse détaillée ci-dessus en a), mais en utilisant comme solvants un mélange constitué de 240 ml de DMF anhydre et 60 ml de méthanol.

Les analyses effectuées révèlent également que les particules de la poudre obtenue sont peu poreuses et amorphes (RX).

Ces essais démontrent qu'il n'est pas possible d'aboutir à un matériau à structure cristalline pseudo-cubique conforme à la présente invention en utilisant du tetrachlorure de titane à titre de précurseur de titane à la place d'un alcoxyde de titane de formule (I), et ce quel que soit le milieu solvant utilisé lors de la synthèse (milieu DMF pur ou mélange de DMF et de méthanol).

### Exemple 5

### Préparation d'un MOF de titane à partir d'un oxo-complexe de titane préformé

Dans cet exemple, on a synthétisé un matériau hybride de formule Ti₈O₈(OH)₄[O₂C-C₆H₄-CO₂]₆ en utilisant, à titre de précurseur de titane, un oxo-cluster de titane de formule Ti₁₆O₁₆(OEt)₃₂.

### 1) Première étape : Synthèse de l'oxo-complexe de titane de formule Ti₁₆O₁₆(OEt)₃₂

L'oxo-complexe Ti₁₆O₁₆(OEt)₃₂ a été obtenu par hydrolyse contrôlée en conditions sous-stoechiométriques en eau (H₂O/Ti = 0,5] de l'alcoxyde de titane Ti(OEt)₄ dans l'éthanol absolu. Un mélange réactionnel composé de 7 mL de Ti(OEt)₄, de 7 mL d'éthanol absolu et de 300 µL d'eau a été traité en milieu solvothermal pendant 15 jours à 100°C. La cristallisation de l'oxo-complexe de titane a été provoquée par un refroidissement lent du mélange réactionnel (vitesse de refroidissement : 1°C/heure). L'oxo-complexe de titane sous forme cristallisée a alors été récupéré après filtration avec un rendement de 70 %.

La détermination de la structure cristalline de l'oxo-complexe a été effectuée par diffraction des rayons X de mono-cristaux. Elle est représentée de façon schématique sur la figure 8 annexée. La détermination de la structure a permis de mettre en évidence la formation d'un édifice formé de deux blocs orthogonaux de huit oxo-complexes de titane chacun, admettant un pseudo-axe de rotation inverse -4. Les 16 atomes de titane sont connectés par trois différents types de ponts oxo, 4 oxygènes étant liés deux fois aux centres métalliques [µ₂-O], 8 étant liés trois fois au titane [µ₃-O] et 4 étant liés quatre fois au titane [µ₄-O]. A la surface du coeur oxo se trouve une couronne de 32 éthoxydes, 16 d'entre eux sont des groupements terminaux, les 16 autres sont des groupements pontants. Cette structure est décrite en détail dans les articles de A. Mosset et al., C.R. Acad. Sci. Paris, t.307, Série II, 1988, p.1747-1750 et de J. Galy et al., Chem. Soc. Dalton Trans., 1991, p.1999.

### 2) Deuxième étape : Synthèse du matériau hybride de formule Ti₈O₈(OH)₄[O₂C-C₆H₄-CO₂]₆

0,17g de l'oxo-complexe de titane Ti₁₆O₁₆(OEt)₃₂ obtenu ci-dessus à l'étape précédente et 0,27 g d'acide téréphtalique ont été introduits dans un mélange de 4 mL de DMF et 1 mL de méthanol. Le mélange réactionnel a été placé en autoclave à 150°C pendant 20 heures. Le précipité obtenu a été filtré, lavé 3 fois au DMF puis séché 20 h à 150°C. Le rendement de la réaction a été de 74 %.

On a obtenu un matériau hybride en tous points identiques à celui de l'exemple 1.

### Exemple 6

### Préparation d'un MOF de titane à partir d'un oxo-complexe de titane préformé

Dans cet exemple, on a synthétisé un matériau hybride de formule Ti₈O₈(OH)₄[O₂C-C₆H₄-CO₂]₆ en utilisant, à titre de précurseur de titane, un oxo-cluster de titane de formule Ti₈O₈(OOC(CH₃)₃)₁₆.

### -1) Première étape : Synthèse de l'oxo-complexe de titane de formule Ti₈O₈(OOC(CH₃)₃)₁₆

Le complexe moléculaire de formule Ti₈O₈(OOCC(CH₃)₃)₁₆ a été obtenu en condition solvothermale (24 heures à 100-110°C dans un autoclave) par la réaction de 2 ml de Ti(OiPr)₄ avec 7 g d'acide pivalique (HOOCC(CH₃)₃) dans 50 ml d'acétonitrile. L'oxo-complexe de titane ainsi formé sous forme cristallisée a alors été récupéré après filtration avec un rendement de 94%

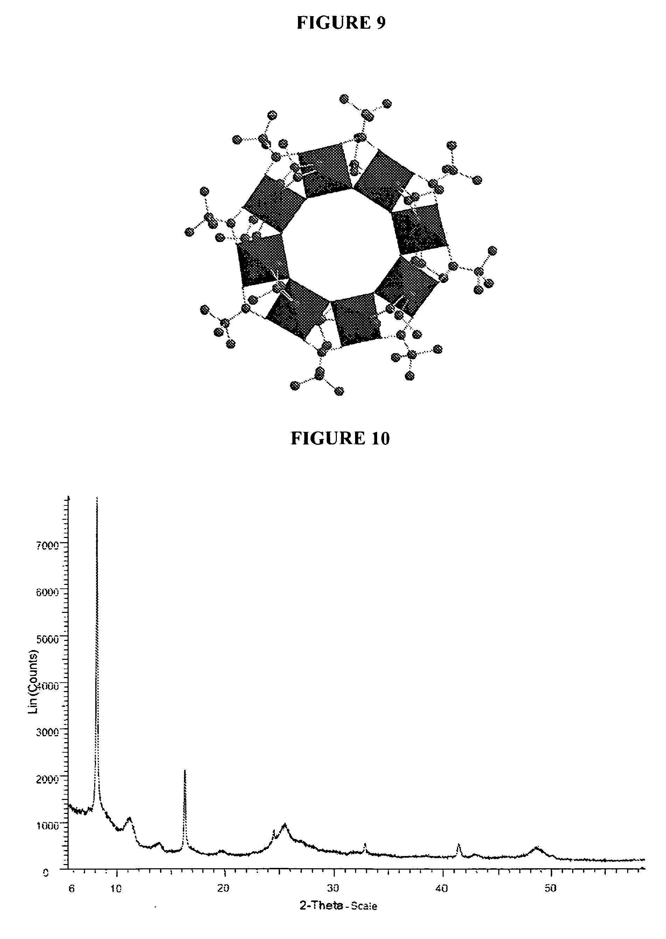

La détermination de la structure cristalline de l'oxo-complexe a été effectuée par diffraction des rayons X de mono-cristaux. Elle est représentée de façon schématique sur la figure 9 annexée. La détermination de la structure a permis de mettre en évidence la formation d'une couronne de huit oxo-complexes de titane octaédriques liés par des sommets, et de 16 groupements carboxylates pontants bidentates. Huit groupements carboxylate se placent en position équatoriale, les huit autres en position axiale (4 de chaque coté du plan formé par la couronne du coeur oxo).

### 2) Deuxième étape : Synthèse du matériau hybride de formule Ti₈O₈(OH)₄[O₂C-C₆H₄-CO₂]₆

0,6 g de l'oxo-complexe de titane de formule Ti₈O₈(OOCC(CH₃)₃)₁₆ obtenu ci-dessus à l'étape précédente et 1,55 g d'acide téréphtalique ont été introduits dans un mélange constitué de 18 mL de DMF et 4,5 mL de méthanol. Ce mélange réaction a été placé en autoclave à 110°C pendant 4 jours. Le précipité obtenu a été filtré, lavé 3 fois au DMF puis séché 20 h à 150°C. Le rendement de la réaction a été de 97%.

On a obtenu un matériau hybride en tous points identiques à celui de l'exemple 1.

### Exemple 7

### Préparation d'un matériau hybride de formule Ti₈O₈(OH)₄[O₂CH₂S-CO₂]₆ à partir du matériau de formule Ti₈O₈(OH)₄[O₂C-C₆H₄-CO₂]₆

Dans cet exemple, on a réalisé la synthèse d'un matériau hybride de formule Ti₈O₈(OH)₄[O₂C-C₄H₂S-CO₂]₆ c'est-à-dire d'un matériau hybride constitué de sous-unités de formule (I) conformes à l'invention dans lesquelles X représente un cycle thiophène par échange de l'espaceur organique à partir du matériau préparé à l'exemple 1 ci-dessus, c'est-à-dire un matériau hybride constitué de sous-unités de formule (I) dans lesquelles X est un cycle benzénique.

1 g du matériau de formule Ti₈O₈(OH)₄[O₂C-C₆H₄-CO₂]₆ obtenu ci-dessus à l'exemple 1 et 5 g de dicarboxylate de thiophène ont été dispersés dans un mélange constitué de 40 mL de DMF et de 10 mL de méthanol. Cette dispersion a été placée en conditions solvothermales à 150°C pendant 16 heures. Après refroidissement, la poudre obtenue du matériau cristallisé attendu a été filtrée, lavée 3 fois au DMF et séchée pendant 6 heures à 150°C. Le rendement de cette réaction d'échange a été de 93%.

Cet exemple montre qu'il est possible d'accéder à des matériaux hybrides cristallisés par simple échange des espaceurs organiques.

### Exemple 8

### Synthèse d'une phase TiO-BDC de composition TiO[O₂C-C₆H₄-CO₂]

1,5 mmol d'acide 1,4-benzènedicarboxylique (250 mg) (Aldrich, 98 %) puis 1 mmol d'isopropoxyde de titane Ti(OiPr)₄ (0,3 ml) (Acros Organics, 98%), ont été introduits dans un corps en Téflon® contenant 5 ml d'un mélange constitué de 2,5 ml de diméthylformamide anhydre (Acros Organics) et de 2,5 ml de méthanol (Aldrich, 99,9%). Le mélange réactionnel a été agité pendant 5 minutes à température ambiante.

Le corps en Téflon® a ensuite été introduit dans un corps métallique PAAR puis mis à l'étuve à 150°C pendant 15 heures. Après retour à température ambiante, le matériau attendu sous forme d'un solide blanc a été récupéré par filtration, lavé à l'acétone deux fois et séché à l'air. Une phase cristallisée, dénotée TiO-BDC

Le diagramme de diffraction aux RX est représenté sur la figure 10 annexée sur laquelle l'intensité (exprimée en unités arbitraires) est fonction de l'angle de diffraction en degrés.

Les mesures de surface spécifique de ce matériau, réalisées sur un échantillon de 20 mg préalablement activé sous vide primaire (10⁻³ Torr) pendant 15 heures à 150°C,permettent de calculer une surface BET de 250(15) m².g⁻¹.

La stabilité thermique du solide a été évaluée. Le diffractogramme RX a été collecté avec un diagramme tous les 20°C sous air (non représenté). Le solide TiO-BDC a été trouvé stable jusqu'à une température de 300 °C.

### Exemple 9

### Synthèse d'une phase Ti-BDC(2OH) de composition TiO[O₂C-C₆H₂(OH)₂-CO₂]

0,67 mmol d'acide 2,5-dihydroxy-1,4-dicarboxylique (150 mg) (Aldrich, 98 %) puis 0,33 mmol d'isopropoxyde de titane Ti(OiPr)₄ (0,1 ml) (Acros Organics, 98%), sont introduits dans une solution contenant 2,5 ml de diméthylformamide (Acros Organics, extra-dry) et 2,5 ml de méthanol (Aldrich, 99,9%). La mixture a été agitée pendant 5 minutes à température ambiante.

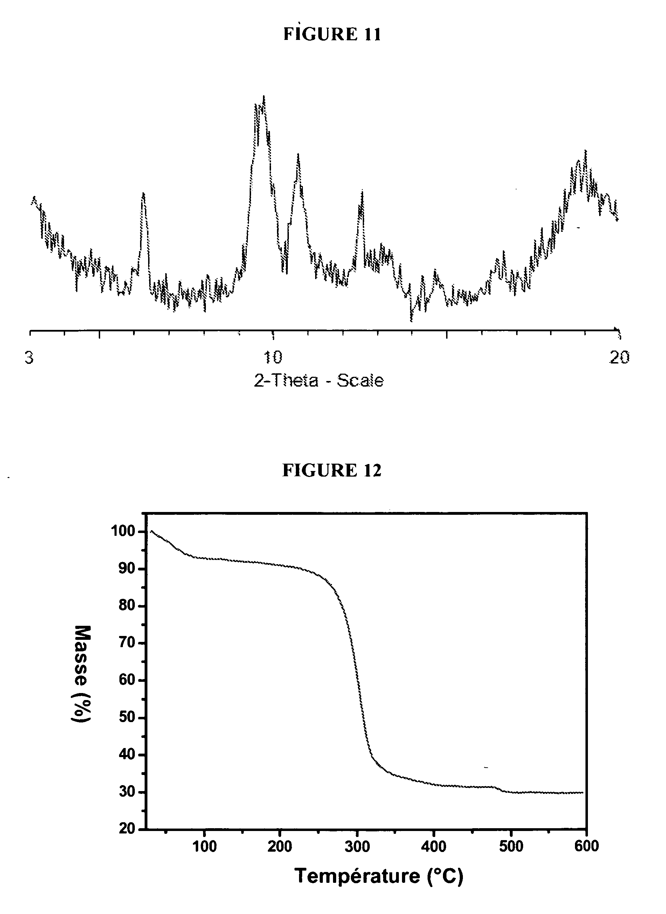

Le corps en Téflon a ensuite été introduit dans un corps métallique PAAR puis mis à l'étuve à 200°C pendant 15 heures. Après retour à température ambiante, le solide de couleur orange vif, a été récupéré par filtration, lavé à l'acétone deux fois et séché à l'air. On a obtenu une phase cristallisée orangée, dénommée Ti-BDC(2OH) dont le diffractogramme RX est représenté sur la figure 11 annexée sur laquelle l'intensité, en unités arbitraires, est fonction de l'angle de diffraction en degrés.

Les mesures de surface spécifique de ce matériau, réalisées sur un échantillon de 20 mg préalablement activé sous vide primaire (10⁻³ Torr) pendant 15 heures à 200°C, ont permis de calculer une surface BET de 980(15) m².g⁻¹.

Les résultats de l'analyse thermogravimétrique du matériau préparé dans cet exemple, réalisées sur l'appareil STA6000, sont donnés sur la figure 12 annexée. Sur cette figure, la masse (exprimée en pourcentage) est fonction de la température (exprimée en °C). Les pertes calculées, à partir d'une formule TiO[O₂C-C₆H₂(OH)₂-CO₂].H₂O, sont respectivement de 6,8 % (eau libre) et de 62,7 %, en très bon accord avec les pertes expérimentales (environ 7 et 63 % respectivement). Cette expérience a également montré que le matériau Ti-BDC(2OH) est stable sous air jusqu'à 205°C.

### Exemple 10

### Utilisation de la phase Ti-NH₂BDC pour le stockage du dioxyde de carbone

Dans cet exemple, la capacité d'adsorption/désorption vis-à-vis du dioxyde de carbone de la phase Ti-NH₂BDC préparée à l'exemple 2 ci-dessus a été testée.

Les propriétés d'adsorption du CO₂ de la phase Ti-NH₂BDC ont été testées à l'aide d'un appareil gravimétrique IGA de la marque Hiden Isochema.

30 mg du solide Ti-NH₂BDC ont été introduits dans la balance et activés d'abord sous vide secondaire (10⁻⁶ Torr) à température ambiante pendant 1 heure puis à 200°C pendant 15 heures. La capacité d'adsorption/désorption a été testée à différentes températures : 10, 20, 30 et 40°C. Pour chaque température, le CO₂ a été introduit à pression variable, entre 50 mbar et 20 bar, et la masse de solide chargé en CO₂ a été mesurée après que l'équilibre aie été atteint (durée maximale de 30 minutes). Par déduction de la masse initiale de solide sec, la quantité de CO₂ adsorbée dans les pores du matériau a pu ainsi être calculée. Entre deux mesures à des températures différentes, le solide a été dégazé pendant une nuit à 150°C sous vide secondaire.

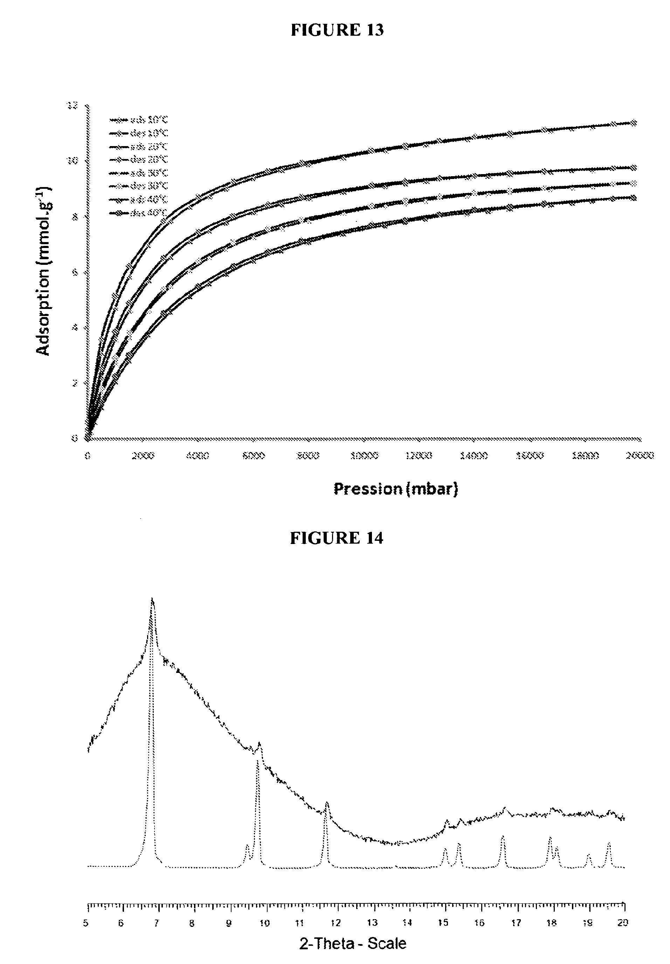

Les résultats obtenus sont représentés sur la figure 13 annexée, sur laquelle la quantité de dioxyde de carbone adsorbée (en mmol.g⁻¹) est fonction de la pression (en mbar). Sur cette figure, les différents couples de courbes, en partant de la courbe la plus haute et en allant vers la courbe la plus basse, représentent respectivement l'adsorption (triangles pleins) et la désorption du CO₂ (ronds pleins) à 10, 20, 30 et 40°C. Les résultats présentés sur cette figure montrent que le matériau de l'exemple 2 est capable d'adsorber de grandes quantités de CO₂ avec une affinité remarquable à basse pression, symbolisée par l'adsorption de près de 3,8 mmol.g⁻¹ de CO₂ à 20°C sous 1 bar de pression.

### Exemple 11

### Synthèse de la phase Ti-NH₂BDC selon un procédé dans lequel l'étape de chauffage est réalisée au four à micro-ondes.

Dans cet exemple on a synthétisé la phase Ti-NH₂BDC selon un procédé dans lequel la deuxième étape a été réalisée par chauffage dans un four à micro-ondes.

1,66 mmol d'acide 2-aminotéréphtalique (300 mg) (Aldrich, 98 %) puis 273 mg d'oxocluster de titane Ti₈O₈(OOC(CH₃)₃)₁₆ ont été introduits dans une solution contenant 5 ml de diméthylformamide (Acros Organics, 99 %) et 1 ml de méthanol (Aldrich, 99,9%). Le mélange réactionnel a été agité pendant 1 minute à température ambiante.

Le corps en Téflon (100 ml de contenance) a ensuite été introduit dans un four microondes (CEM, Mars 300, équipé d'un carrousel de 14 réacteurs) et une puissance de 400W a été appliquée avec une montée en température de 2 minutes jusqu'à 150°C. Un palier de 15 minutes a été observé à cette température et à cette puissance. Après retour à température ambiante, le solide jaune ainsi obtenu, a été récupéré par filtration, lavé à l'acétone deux fois et séché à l'air.

Le diagramme de diffraction aux RX du matériau obtenu est représenté sur la figure 14 annexée sur laquelle l'intensité (en unités arbitraires) est fonction de l'angle de diffraction (en degrés) (courbe haute). A titre comparatif, le spectre du matériau Ti-NH₂BDC obtenu ci-dessus à l'exemple 2 est également représenté sur la figure 14 (courbe basse).

L'élargissement significatif des raies de diffraction montre que le produit obtenu par méthode microondes possède une taille de particules très inférieure à celle du solide obtenu par voie solvothermale.

### Exemple 12

### Mise en évidence des propriétés photochromes et photocatalytiques de la phase TiBDC

0,025 g de TiBDC ont été immergés dans 0,015 ml d'alcool benzylique puis soumis à une irriation UV à une longueur d'onde de 350 nm pendant 15 minutes sous flux d'azote.

La même expérience a été réalisée sur une poudre de TiO₂ commerciale vendue sous la référence P25 par la société Degussa.

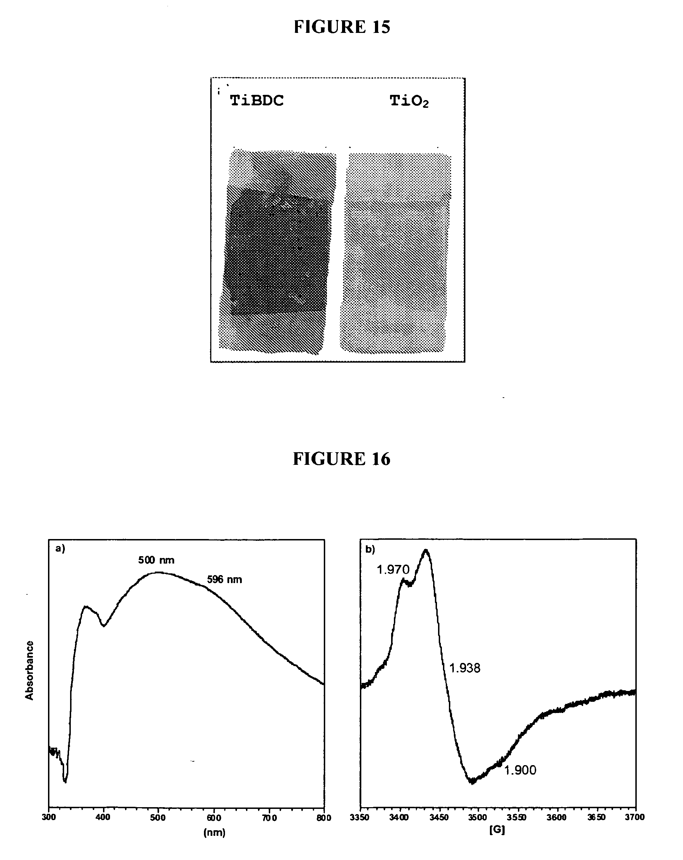

La figure 15 annexée montre une photographie de ces deux matériaux après imprégnation par l'alcool benzylique et irradiation UV. On observe une coloration spontannée et intense du matériau TiBDC en gris-bleu foncé. Cet effet photochrome, rapidement observé, est du à la réduction des centres titane (IV) en titane (III).

Par contre, seule une très faible coloration de la poudre de TiO₂ a été observée.

L'intensité de coloration du matériau TiBDC imbibé d'alcool benzylique s'explique par un grand nombre de sites photoactifs susceptibles d'être stabilisés sous forme Ti(III).

La figure 16 annexée représente le spectre UV (figure 16 a : absorbance en fonction de la longueur d'onde en nm) et le spectre de résonance paramagnétique électronique (RPE) à 75 K du matériau TiBDC après imprégnation et irradiation UV (figure 16 b: absorption dérivée en fonction du champ magnétique (G)). Le spectre RPE permet de mettre en évidence l'existence des sites titane (III) paramagnétiques photoréduits.

La coloration des échantillons est intense et stable en absence d'oxygène.

La stabilité de la coloration pendant plusieurs semaines en absence d'oxygène du matériau TiBDC a été observée, elle est bien supérieure à la coloration de poudres denses de TiO₂ conventionnelles. Cette stabilité s'explique par la présence d'un grand nombre de molécules d'alcool à proximité des centres photoréduits qui vont venir piéger les trous photoinduits, conduisant à l'oxydation des fonctions alcools en aldéhyde.

Le comportement photochrome est réversible, la décoloration de l'échantillon se fait progressivement lorsque la poudre est placée sous oxygène.

Ces deux phénomènes sont concomitants : le caractère photochrome est du à la réduction des Ti^{IV} en Ti^{III} et le caractère photocatalytique à l'oxydation des molécules absorbées (par exemple alcool en aldéhyde).

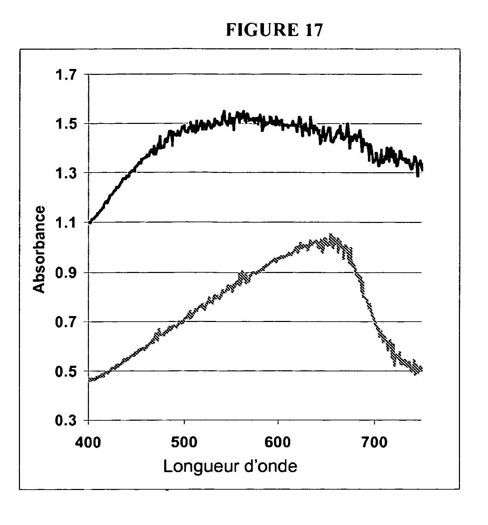

La figure 17 représente les spectres d'absorption UV-visible du TiBDC (courbe haute) et du TiO₂ (courbe basse) après imprégnation par l'alcool benzylique et irradiation UV. Sur cette figure l'absorbance est fonction de la longueur d'onde (en nm).

Cet exemple démontre donc que la surface spécifique élevée et accessible du matériau TiBDC permet l'absorption aisée de molécules organiques au sein de l'édifice tridimentionnel.

Les matériaux conforment à l'invention peuvent ainsi trouver des applications dans le domaine de l'inscription laser, de la catalyse hétérogène ou encore comme matériau indicateur d'oxygène.

## Revendications

1. Matériau solide hybride inorganique-organique à base de titane, **caractérisé en ce qu'**il présente une structure cristalline pseudo-cubique et qu'il est constitué exclusivement d'unités de formule (I) suivante :
TiₐO_{b}(OH)_{c}[(⁻OOC)-X-#]_{d} (I)
dans lesquelles :
- X est un espaceur organique et représente une chaîne aliphatique linéaire ou ramifiée, saturée ou insaturée, ayant de 2 à 12 atomes de carbone ; un groupement aromatique hydrocarboné mono, bi- ou tricyclique substitué ou non par un ou plusieurs substituants R indépendamment choisis parmi un atome d'halogène et les groupements amino, nitro, hydroxyle, trifluoroalkyle en C₁-C₄ et alkyle en C₁-C₄ ; un groupement benzophénone ; un groupement hétéroaromatique mono- ou bicyclique dans lequel le ou les cycles comportent 5 ou 6 chaînons, ledit groupement contenant au moins un hétéroatome choisi parmi l'azote et le soufre et étant substitué ou non par un ou plusieurs substituants R indépendamment choisis parmi un atome d'halogène et les groupements amino, nitro, hydroxyle, trifluoroalkyle en C₁-C₄ et alkyle en C₁-C₄ ;
- a, et b, identiques ou différents, sont des nombres entiers variant de 1 à 16 inclusivement ;
- c et d, identiques ou différents, sont des nombres entiers variant de 1 à 32 inclusivement ;
- les indices a, b, c et d respectent la relation 4a = 2b + c + d ;
- les atomes de titane forment une brique élémentaire purement inorganique constituée d'oxo-complexes de titane ;
- # est le point par lequel deux unités de formule (I) sont reliées entre elles ; # représente une liaison covalente entre un atome de carbone appartenant à l'espaceur X et l'atome de carbone d'un groupement carboxylate COO⁻ d'une autre unité de formule (I) et dans laquelle les deux atomes d'oxygène du groupement carboxylate appartiennent respectivement à deux oxo-complexes de titane octaédriques adjacents d'une brique élémentaire de ladite autre unité de formule (I);
lesdites unités de formule (I) formant ensemble une structure tridimensionnelle et délimitant des cavités de diamètre libre de 4 à 40 Å accessibles par des fenêtres triangulaires de dimensions de 4 à 15 Å.

2. Matériau selon la revendication 1, **caractérisé en ce que** les chaînes aliphatiques définies pour X sont choisies parmi les chaînes alkyle en C₁-C₄ et alcènes ou alcynes en C₂-C₄.

3. Matériau selon la revendication 1 ou 2, **caractérisé en ce que** les groupements hydrocarbonés définis pour X sont choisis parmi les groupements phénylène ; chloro-phénylène ; bromophénylène ; aminophénylène ; nitrophénylène ; mono-, di- ou tetraméthylphénylène ; mono- ou diéthénylphénylène ; mono- ou dihydroxyphénylène ; biphénylène ; diphényldiazène ; naphtalène et anthracène.

4. Matériau selon la revendication 1 ou 2, **caractérisé en ce que** les hétérocycles définis pour X sont choisis parmi les cycles thiophène, bithiophène, pyridine, bipyridine et pyrazine.

5. Matériau selon la revendication 1 ou 2, **caractérisé en ce que** la sous-unité [⁻OOC-X-#] est choisie parmi les groupements de formules (II-1) à (II-13) suivantes : 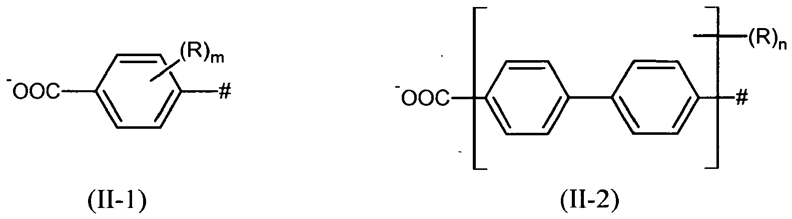 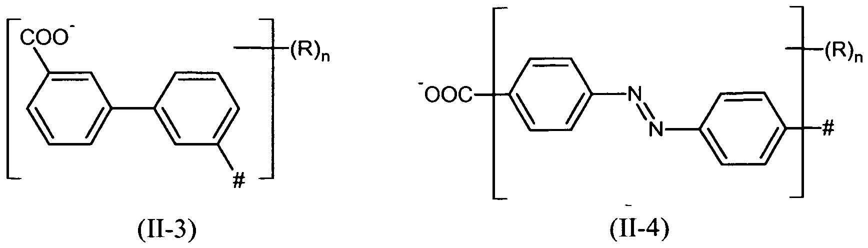 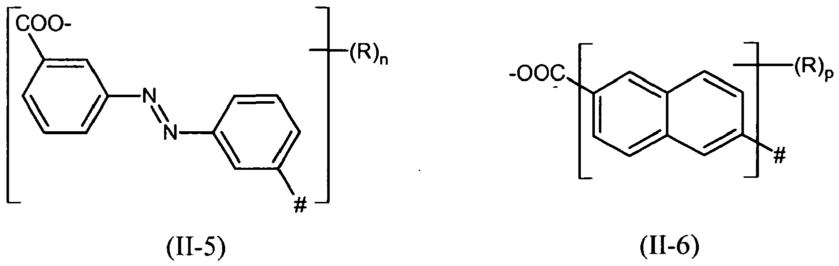 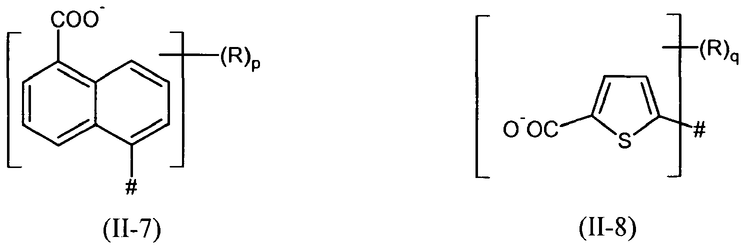 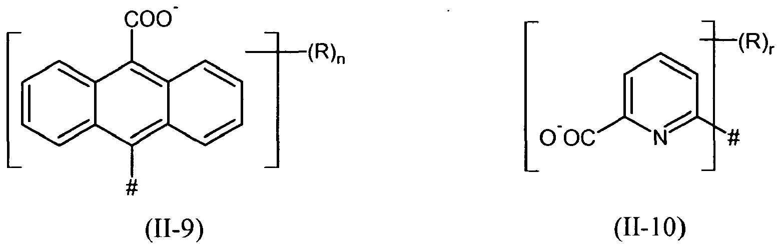 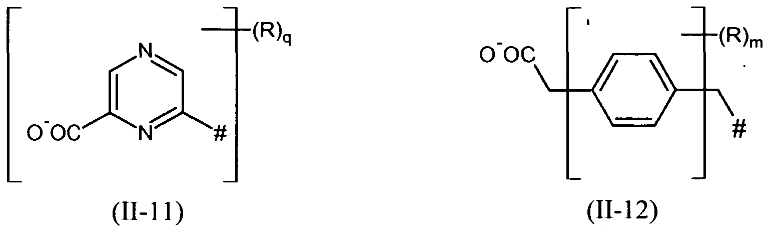 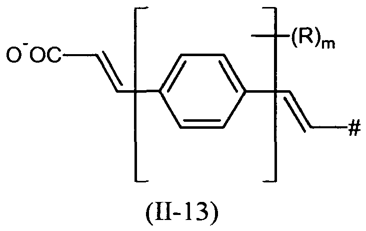 dans lesquelles :
- R est un atome d'halogène, un groupement amino, nitro, hydroxyle, trifluoroalkyle en C₁-C₄ ou alkyle en C₁-C₄ ;
- m est un nombre entier allant de 0 à 4,
- n est un nombre entier allant de 0 à 8,
- p est un nombre entier allant de 0 à 6,
- q est un nombre entier allant de 0 à 2,
- r est un nombre entier allant de 0 à 3.

6. Matériau selon la revendication 5, **caractérisé en ce que** la sous-unité [-OOC-X-#] est choisie parmi le phényl-1-carboxylate, le phényl-2-amino-1-carboxylate, le phényl-2,5-dihydroxy-1-carboxylate et le thiophène-2-carboxylate.

7. Matériau selon la revendication 1, **caractérisé en ce que** les unités de formule (I) sont choisies parmi les sous-unités de formule (I-1) suivante :
Ti₈O₈(OH)₄[(⁻OOC)-X-#]₁₂ (I-1)
dans lesquelles :
- X et # sont tels que définis ci-dessus à la revendication 1 ;
- les atomes de titane forment une brique élémentaire purement inorganique constituée de 8 oxo-complexes de titane octaédriques comportant chacun un atome de titane central entouré par 6 atomes d'oxygène, lesdits oxo-complexes de titane octaédriques étant reliés entre eux soit par une arête commune, soit par un sommet commun, dans les deux cas par l'intermédiaire de ponts oxo -O- ou hydroxo -OH- ; lesdites briques étant connectées entre elles dans les trois dimensions de l'espace par les espaceurs organiques X ; étant entendu que chacune des briques est reliée à 12 espaceurs organiques par l'intermédiaire des groupements carboxylates COO⁻ dans lesquels chacun des deux atomes d'oxygène fait partie intégrante de deux oxo-complexes de titane adjacents.

8. Matériau selon l'une quelconque des revendications précédentes, **caractérisé en ce que** les cavités ont un diamètre libre de 5 à 12,6 Å.

9. Matériau selon l'une quelconque des revendications précédentes, **caractérisé en ce qu'**il a une surface spécifique BET de 200 à 6000 m²/g.

10. Matériau selon l'une quelconque des revendications précédentes, **caractérisé en ce qu'**il a un volume poreux de 0,1 à 3 cm³/g.

11. Utilisation d'un matériau tel que défini à l'une quelconque des revendications précédentes, comme support de catalyseur pour la réalisation de réactions chimiques catalysées en phase hétérogène ou comme matériau de stockage/séparation/purification de gaz ou comme matrice pour l'encapsulation de principes actifs (médicaments, cosmétiques) ou bien encore comme matériau photochrome pour le stockage d'information, l'impression laser ou comme indicateur d'oxygène.

12. Procédé de préparation d'un matériau solide hybride inorganique-organique à base de titane tel que défini à l'une quelconque des revendications 1 à 10, **caractérisé en ce qu'**il comporte les étapes suivantes :
1) dans une première étape on prépare un mélange réactionnel comprenant :
i) au moins un précurseur de titane choisi parmi les alcoxydes de titane de formule (III) suivante :
Ti(OR₁)₄ (III)
dans laquelle R₁ est un radical alkyle linéaire ou ramifié comportant de 1 à 4 atomes de carbone ou au moins un oxo-complexe de titane de formule (IV) suivante :
TiₓO_{y}(OR₂)_{z}(OOCR₃)_{w} (IV)
dans laquelle :
- R₂ représente un atome d'hydrogène, un radical alkyle en C₁-C₆ linéaire ou ramifié ou un cycle phényle éventuellement substitué par un ou plusieurs radicaux choisis parmi un atome d'halogène, les radicaux alkyle en C₁-C₄ et alcène en C₂-C₃;
- R₃ représente un radical alkyle en C₁-C₄ linéaire ou ramifié, un radical trihalogénoalkyle en C₁-C₄ ou un cycle phényle,
- x est un nombre entier allant de 2 à 18,
- y est un nombre entier allant de 1 à 27,
- z est un nombre entier allant de 0 à 32,
- w est un nombre entier allant de 0 à 16,
et dans lequel les atomes de titane forment une brique élémentaire constituée d'un coeur purement inorganique d'oxo-complexes de titane en coordinence octaédrique comportant chacun un atome de titane central entouré par 6 atomes d'oxygène, lesdits oxo-complexes de titane octaédriques étant reliés entre eux soit par une arête commune, soit par un sommet commun, dans les deux cas par l'intermédiaire de ponts oxo -O- ou hydroxo -OH- ; lesdites briques étant entourées par des ligands organiques de type alcoolate (OR₂) et/ou carboxylate (OOCR₃).
ii) au moins un acide dicarboxylique de formule (V) suivante :
HOOC-X'-COOH (V)
dans laquelle X' représente une chaîne aliphatique linéaire ou ramifiée, saturée ou insaturée, ayant de 2 à 12 atomes de carbone, un groupement benzophénone ou un groupement aromatique hydrocarboné mono, bi- ou tricyclique substitué ou non par un ou plusieurs substituants R' indépendamment choisis parmi un atome d'halogène et les groupements amino, nitro, hydroxyle, trifluoroalkyle en C₁-C₄ et alkyle en C₁-C₄ ;
iii) un mélange d'au moins deux solvants organiques comprenant au moins un solvant S1 choisi parmi les alcools en C₁-C₄, l'alcool benzylique et l'alcool chlorobenzylique, et au moins un solvant S2 choisi parmi le N,N-diméthylformamide, le N,N-diéthylformamide, le diméthylsulfoxyde, l'éthylèneglycol, le dioxane, l'acétonitrile, l'acétone, le tetrahydrofurane, la pyridine et la N-méthylpyrrolidone ;
2) dans une deuxième étape, on porte le mélange réactionnel ainsi obtenu à une température de 70 à 200°C, pendant 4 à 72 heures, jusqu'à obtention d'un précipité correspondant au matériau solide attendu, puis
3) dans une troisième étape, le mélange réactionnel est refroidi jusqu'à la température ambiante,
4) dans une quatrième étape, on sépare le matériau solide du mélange de solvants organiques ;
étant entendu que lorsque le matériau solide est constitué d'unités de formule (I) dans lesquelles X est un groupement hétéroaromatique mono- ou bicyclique dans lequel le ou les cycles comportent 5 ou 6 chaînons éventuellement substitués, ledit groupement contenant au moins un hétéroatome choisi parmi l'azote et le soufre, alors ledit procédé comprend en outre les étapes supplémentaires suivantes :
5) une cinquième étape de préparation d'une dispersion du matériau solide issu de la quatrième étape dans au moins un solvant organique polaire, en présence d'au moins un acide dicarboxylique de formule (VI) suivante :
HOOC-X"-COOH (VI)
dans laquelle X" représente un groupement hétéroaromatique mono- ou bicyclique dans lequel le ou le cycles comportent 5 ou 6 chaînons, ledit groupement contenant au moins un hétéroatome choisi parmi l'azote et le soufre et étant substitué ou non par un ou plusieurs substituants R indépendamment choisis parmi un atome d'halogène et les groupements amino, nitro, hydroxyle, trifluoroalkyle en C₁-C₄ et alkyle en C₁-C₄,
6) une sixième étape, au cours de laquelle on porte la dispersion ainsi obtenue à une température de 100 à 150°C pendant une durée de 4 heures à 4 jours, ce qui entraîne la formation d'un précipité correspondant au matériau solide attendu, puis
7) une septième étape au cours de laquelle on laisse la température revenir à température ambiante, et
8) une huitième étape de séparation du matériau solide ainsi obtenu du ou des solvants organiques.

13. Procédé selon la revendication 12, **caractérisé en ce que** les précurseurs de formule (III) sont choisis parmi l'éthoxyde de titane, l'isopropoxyde de titane, le n-propoxyde de titane et le butoxyde de titane.

14. Procédé selon la revendication 12 ou 13, **caractérisé en ce que** les oxo-complexes de titane de formule (IV) sont choisis parmi Ti₁₆O₁₆(OCH₂CH₃)₃₂ et Ti₈O₈(OOCR₃)₁₆ dans lequel R₃ est tel que défini à la revendication 12.

15. Procédé selon l'une quelconque des revendications 12 à 14, **caractérisé en ce que** l'acide dicarboxylique de formule (V) est choisi parmi l'acide benzène-1,4-dicarboxylique, l'acide 2-amino-benzène-1,4-dicarboxylique, l'acide 2-nitro-benzène-1,4-dicarboxylique, l'acide 2-chloro-benzène-1,4-dicarboxylique, l'acide 2-bromo-benzène-1,4-dicarboxylique, l'acide 2,5-dihydroxy-benzène-1,4-dicarboxylique, l'acide 2-méthyl-benzène-1,4-dicarboxylique, l'acide 2,5-diméthyl-benzène-1,4-dicarboxylique, l'acide diphényl-4,4'-dicarboxylique, l'acide diphényl-3,3'-dicarboxylique, l'acide 4,4'-diazène-1,2-diyldibenzoïque, l'acide 3,3'-diazène-1,2-diyldibenzoïque, l'acide naphtalène-2,6-dicarboxylique, l'acide naphtalène-1,5-dicarboxylique, l'acide 1,4-phénylènediacétique, l'acide 1,4-phénylènediacrylique et l'acide 4,4'-benzophénone-dicarboxylique.

16. Procédé selon la revendication 15, **caractérisé en ce que** l'acide dicarboxylique de formule (V) est choisi parmi l'acide benzène-1,4-dicarboxylique, l'acide 2,5-dihydroxy-benzène-1,4-dicarboxylique et l'acide 2-amino-benzène-1,4-dicarboxylique.

17. Procédé selon l'une quelconque des revendications 11 à 16, **caractérisé en ce qu'**u sein du mélange réactionnel, le rapport molaire alcoxyde de titane de formule (III) ou oxo-complexe de titane de formule (IV) / acide dicarboxylique de formule (V) varie de 0,1 à 2.

18. Procédé selon l'une quelconque des revendications 11 à 17, **caractérisé en ce que** les solvants polaires utilisés lors de la cinquième étape sont choisis parmi les mélanges d'au moins deux solvants organiques S1 et S2 comprenant au moins un solvant S1 choisi parmi les alcools en C₁-C₄, l'alcool benzylique et l'alcool chlorobenzylique et au moins un solvant S2 choisi parmi le N,N-diméthylformamide, le N,N-diéthylformamide, le diméthylsulfoxyde, l'éthylèneglycol, le dioxane, l'acétonitrile, l'acétone, le tetrahydrofurane, la pyridine et la N-méthylpyrrolidone.

19. Procédé selon l'une quelconque des revendications 11 à 18, **caractérisé en ce que** les acides dicarboxyliques de formule (VI) sont choisis parmi l'acide thiophène-2,5-dicarboxylique, l'acide pyridine-2,6-dicarboxylique et l'acide pyrazine-2,6-dicarboxylique.

20. Procédé selon l'une quelconque des revendications 11 à 19, **caractérisé en ce que** le rapport molaire matériau solide issu de la quatrième étape / acide dicarboxylique de formule (VI) lors de la cinquième étape varie de 1 à 20.

## Patentansprüche

1. Festes anorganisch-organisches Hybridmaterial, **dadurch gekennzeichnet, dass** es eine pseudo-kubische kristalline Struktur aufweist und dass es ausschließlich aus Einheiten der folgenden Formel (I) besteht:
TiₐO_{b}(OH)_{c}[(⁻OOC)-X-#]_{d} (I)
wobei:
- X ein organischer Spacer ist und eine lineare oder verzweigte, gesättigte oder ungesättigte aliphatische Kette darstellt mit 2 bis 12 Kohlenstoffatomen; eine aromatische mono-, bi- oder trizyklische Kohlenwasserstoffgruppe, die durch einen oder mehrere R-Substituenten substituiert sind oder nicht, unabhängig aus einem Halogenatom und den Amino-, Nitro-, Hydroxyl-, C1-C4-Trifluoralkyl- und C₁-C₄-Alkylgruppen ausgewählt oder nicht; eine Benzophenongruppe; eine mono- oder bizyklische heteroaromatische Gruppe, bei der der Zyklus oder die Zyklen mindestens 5 oder 6 Glieder aufweisen, wobei die Gruppe mindestens ein Heteroatom enthält, das aus dem Stickstoff und dem Schwefel ausgewählt ist und von einem oder mehreren R-Substituenten substituiert ist oder nicht, unabhängig aus einem Halogenatom und den Amino-, Nitro-, Hydroxyl-, C₁-C₄-Trifluroalkyl- und C₁-C₄-Alkylgruppen ausgewählt,
- a und b, identisch oder unterschiedlich, ganze Zahlen sind, die zwischen 1 bis 16 inklusive schwanken,
- c und d, identisch oder unterschiedlich, ganze Zahlen sind, die zwischen 1 bis 32 inklusive schwanken,
- die Indizes a, b, c und d die Gleichung 4a = 2b + c + d respektieren,
- die Titanatome einen rein anorganischen elementaren Baustein bilden, der aus Titanoxokomplexen besteht,
- # der Punkt ist, an dem zwei Einheiten der Formel (I) miteinander verbunden sind, wobei # eine kovalente Bindung zwischen einem Kohlenstoffatom, das zum Spacer X gehört, und dem Kohlenstoffatom einer COO⁻-Carboxylatgruppe einer anderen Einheit der Formel (I) darstellt und in der die zwei Sauerstoffatome der Carboxylatgruppe jeweils zu zwei benachbarten oktaedrischen Titanoxokomplexen eines elementaren Bausteins der anderen Einheit der Formel (I) gehören,
wobei die Einheiten der Formel (I) gemeinsam eine dreidimensionale Struktur bilden und Hohlräume mit freiem Durchmesser von 4 bis 40 Å bilden, die durch dreieckige Fenster der Größen von 4 bis 15 Å zugänglich sind.

2. Material nach Anspruch 1, **dadurch gekennzeichnet, dass** die für X definierten aliphatischen Ketten aus den C₁-C₄-Alkyl- und den C₂-C₄-Alken- oder -Alkinketten ausgewählt sind.

3. Material nach Anspruch 1 oder 2, **dadurch gekennzeichnet, dass** die für X definierten Kohlenwasserstoffgruppen aus den Phenyl-, Chlorphenyl-, Bromphenyl-, Aminophenyl-, Nitrophenyl-, Mono-, Di- oder Tetramethylphenyl-, Mono- oder Diethenylphenyl-, Mono- oder Dihydroxyphenyl-, Biphenyl-, Diphenyldiazen-, Naphtalen- und Anthracengruppen ausgewählt sind.

4. Material nach Anspruch 1 oder 2, **dadurch gekennzeichnet, dass** die für X definierten Heterocyclen aus den Thiophen-, Bithiophen-, Pyridin-, Bipyridin- und Pyrazincyclen ausgewählt sind.

5. Material nach Anspruch 1 oder 2, **dadurch gekennzeichnet, dass** die Untereinheit [-OOC-X-#] aus den folgenden Gruppen der Formeln (II-1) bis (II-13) ausgewählt ist: 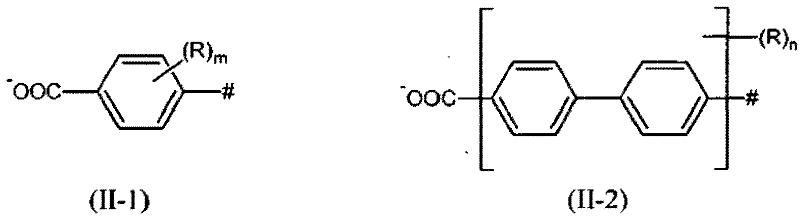 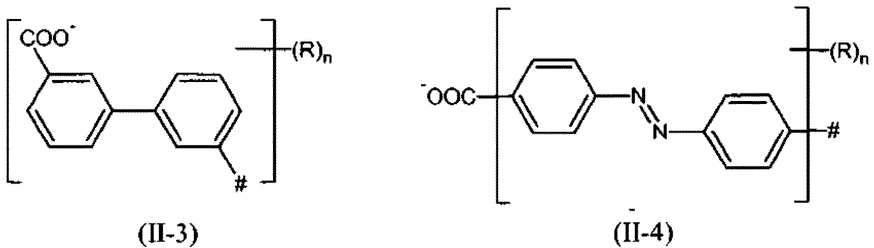 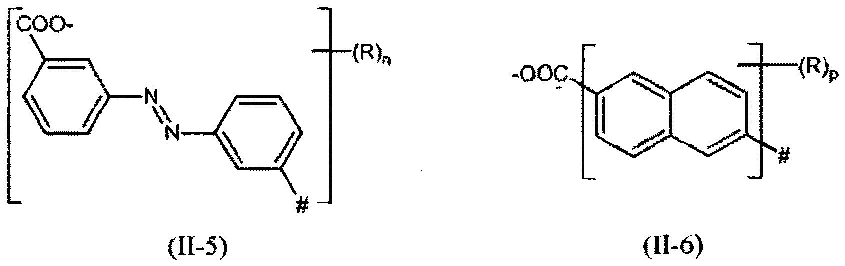 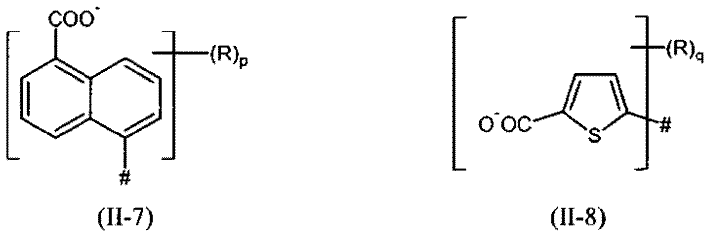 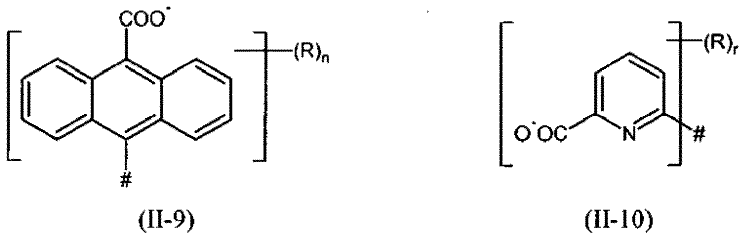 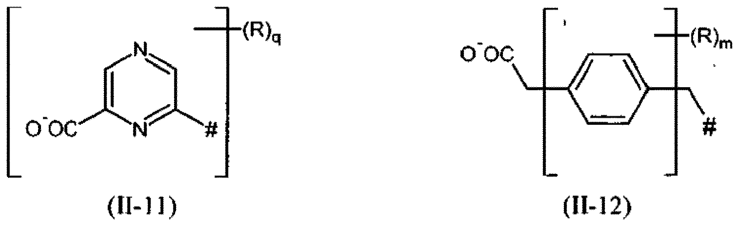 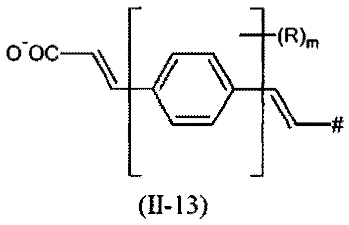 wobei:
- R ein Halogenatom, eine Amino-, Nitro-, Hydroxyl-, C₁-C₄-Trifluoralkyl- oder C₁-C₄-Alkylgruppe ist,
- m eine ganze Zahl von 0 bis 4 ist,
- n eine ganze Zahl von 0 bis 8 ist,
- p eine ganze Zahl von 0 bis 6 ist,
- q eine ganze Zahl von 0 bis 2 ist,
- r eine ganze Zahl von 0 bis 3 ist.

6. Material nach Anspruch 5, **dadurch gekennzeichnet, dass** die Untereinheit [-OOC-X-#] aus dem Phenyl-1-carboxylat, dem Phenyl-2-amino-1-carboxylat, dem Phenyl-2,5-dihydroxy-1-carboxylat und dem Thiophen-2-carboxylat ausgewählt ist.

7. Material nach Anspruch 1, **dadurch gekennzeichnet, dass** die Einheiten der Formel (I) aus den Untereinheiten der folgenden Formel (I-1) ausgewählt sind:
Ti₈O₈(OH)₄[(⁻OOC)-X-#]₁₂ (I-1)
wobei:
- X und # derart sind, wie oben nach Anspruch 1 definiert,
- die Titanatome einen rein anorganischen elementaren Baustein bilden, der aus 8 oktaedischen Titanoxokomplexen besteht, die jeweils ein zentrales Titanatom aufweisen, das von 6 Sauerstoffatomen umgeben ist, wobei die oktaedischen Titanoxokomplexe untereinander entweder durch eine gemeinsame Kante oder durch eine gemeinsame Spitze verbunden sind, in beiden Fällen anhand von oxo-O- oder hydroxo-OH-Brücken; wobei die Bausteine untereinander in den drei Dimensionen des Raums mit Hilfe von organischen Spacern X verbunden sind; wobei es sich versteht, dass jeder der Bausteine mit 12 organischen Spacern mit Hilfe von COO-Carboxylatgruppen verbunden ist, wobei jedes der zwei Sauerstoffatome integrierender Bestandteil von zwei benachbarten Titanoxokomplexen ist.

8. Material nach einem der vorangehenden Ansprüche, **dadurch gekennzeichnet, dass** die Hohlräume einen freien Durchmesser von 5 bis 12,6 Å haben.

9. Material nach einem der vorangehenden Ansprüche, **dadurch gekennzeichnet, dass** es eine spezielle BET-Oberfläche von 200 bis 6.000 m²/g hat.

10. Material nach einem der vorangehenden Ansprüche, **dadurch gekennzeichnet, dass** es ein poröses Volumen von 0,1 bis 3 cm³/g hat.

11. Verwendung eines Materials wie in einem der vorangehenden Ansprüche definiert als Katalysatorträger für die Durchführung katalysierter chemischer Reaktionen in heterogener Phase oder als Gaslager-/-trennungs-/-reinigungsmaterial oder als Matrix für die Verkapselung von Wirkstoffprinzipien (Medikamente, Kosmetika) oder auch als photochromes Material für die Speicherung von Informationen, den Laserdruck oder als Sauerstoffindikator.

12. Verfahren zur Herstellung eines festen anorganischorganischen Hybridmaterials auf Titanbasis, wie nach einem der Ansprüche 1 bis 10 definiert, **dadurch gekennzeichnet, dass** es die folgenden Schritte umfasst:
1) in einem ersten Schritt die Vorbereitung eines Reaktionsgemischs, das umfasst:
i) mindestens einen Titanvorläufer, der aus den Titanalkoxiden der folgenden Formel (III) ausgewählt ist:
Ti(OR₁)₄ (III)
wobei R₁ ein lineares oder verzweigtes Alkylradikal ist, das 1 bis 4 Kohlenstoffatome aufweist oder mindestens einen Titanoxokomplex der folgenden Formel (IV):
TiₓO_{y}(OR₂)_{z}(OOCR₃)_{w} (IV)
wobei:
- R2 ein Wasserstoffatom, ein lineares oder verzweigtes C₁-C₆-Alkylradikal oder einen Phenylcyclus aufweist, eventuell substituiert durch ein oder mehrere Radikale, die aus einem Halogenatom, den C₁-C₄-Alkyl- und C₂-C₃-Alkenradikalen ausgewählt sind,
- R3 ein lineares oder verzweigtes C₁-C₄-Alkylradikal, ein C₁-C₄-Trihalogenalkyl oder einen Phenylcyclus darstellt,
- x eine ganze Zahl von 2 bis 18 ist,
- y eine ganze Zahl von 1 bis 27 ist,
- z eine ganze Zahl von 0 bis 32 ist,
- w eine ganze Zahl von 0 bis 16 ist,
und wobei die Titanatome einen elementaren Baustein bilden, der aus einem rein anorganischem Herzen aus Titanoxokomplexen in oktaedischer Bindung besteht, wobei jeder ein zentrales Titanatom aufweist, das von 6 Sauerstoffatomen umgeben ist, wobei die oktaedischen Titanoxokomplexe untereinander entweder durch eine gemeinsame Kante oder durch eine gemeinsame Spitze verbunden sind, in beiden Fällen anhand von oxo-O- oder hydroxo-OH-Brücken; wobei die Bausteine von organischen Liganden vom Typ Alkoholat (OR₂) und/oder Carboxylat (OOCR₃) umgeben sind,
ii) mindestens eine Dicarboxylsäure der folgenden Formel (V):
HOOC-X'-COOH (V)
wobei X' eine lineare oder verzweigte, gesättigte oder ungesättigte aliphatische Kette darstellt mit 2 bis 12 Kohlenstoffatomen, eine Benzophenon-Gruppe oder eine mono-, bi- oder trizyklische aromatische Kohlenwasserstoffgruppe, substituiert oder nicht durch einen oder mehrere R-Substituenten', die unabhängig aus einem Halogenatom und den Amino-, Nitro-, Hydroxyl-, C₁-C₄-Trifluoralkyl- und C₁-C₄-Alkylgruppen ausgewählt sind,
iii) ein Gemisch von mindestens zwei organischen Lösungsmitteln, das mindestens ein Lösungsmittel S1 umfasst, das aus den C₁-C₄-Alkohlen, dem Benzylalkohol und dem Chlorobenzylalkohol ausgewählt ist, und mindestens ein Lösungsmittel S2, das aus dem N,N-Dimethylformamid, dem N,N-Diethylformamid, dem Dimethylsulfoxid, dem Ethylenglycol, dem Dioxan, dem Acetonitril, dem Aceton, dem Tetrahydrofuran, dem Pyridin und dem N-Methylpyrrolidon ausgewählt ist,
2) in einem zweiten Schritt die Erhitzung des derart hergestellten Reaktionsgemischs auf eine Temperatur von 70 bis 200 °C, während 4 bis 72 Stunden, bis zum Erhalt eines Präzipitats, das dem erwarteten festen Material entspricht, dann
3) in einem dritten Schritt die Abkühlung des Reaktionsgemischs bis auf Raumtemperatur,
4) in einem vierten Schritt die Trennung des festen Materials vom Gemisch organischer Lösungsmittel;
wobei es sich versteht, dass, wenn das feste Material von Einheiten der Formel (I) gebildet wird, in denen X eine mono- oder bicyclische heteroaromatische Gruppe ist, in der der Zyklus oder die Zyklen 5 oder 6 eventuell substituierte Glieder aufweisen, wobei die Gruppe mindestens ein Heteroatom enthält, das aus dem Stickstoff und dem Schwefel ausgewählt ist, das Verfahren dann ferner die folgenden zusätzlichen Schritte umfasst:
5) in einem fünften Schritt die Zubereitung einer Dispersion des festen Materials, das aus dem vierten Schritt resultiert, in mindestens einem polaren organischen Lösungsmittel, in Anwesenheit von mindestens einer Dicarboxylsäure der folgenden Formel (VI):
HOOC-X"-COOH (VI)
wobei X" eine mono- oder bizyklische heteroaromatische Gruppe darstellt, in der der Zyklus oder die Zyklen 5 oder 6 Glieder aufweisen, wobei die Gruppe mindestens Heteroatom enthält, das aus dem Stickstoff und dem Schwefel ausgewählt ist, und durch einen oder mehrere R-Substituenten substituiert sind oder nicht, die unabhängig aus einem Halogenatom und den Amino-, Nitro-, Hydroxyl-, C₁-C₄-Trifluoralkyl- und C₁-C₄-Alkylgruppen ausgewählt sind,
6) in einem sechsten Schritt die Erhitzung der derart hergestellten Dispersion auf eine Temperatur von 100 bis 150°C während einer Dauer von 4 Stunden bis 4 Tage, was zur Bildung eines Präzipitats führt, das dem erwarteten festen Material entspricht, dann
7) einen siebenten Schritt, bei dem die Temperatur auf Raumtemperatur kommt, und
8) in einem achten Schritt der Trennung des derart hergestellten festen Materials von dem oder den organischen Lösungsmitteln.

13. Verfahren nach Anspruch 12, **dadurch gekennzeichnet, dass** die Vorläufer der Formel (III) aus dem Titanethoxid, dem Titanisopropoxid, dem Titan-n-propoxyd und dem Titanbutoxyd ausgewählt sind.

14. Verfahren nach Anspruch 12 oder 13, **dadurch gekennzeichnet, dass** die Titanoxokomplexe der Formel (IV) aus dem Ti₁₆O₁₆(OCH₂CH₃)₃₂ und Ti₈O₈(OOCR₃)₁₆, in dem R₃ wie in Anspruch 12 definiert ist, ausgewählt sind.

15. Verfahren nach einem der Ansprüche 12 bis 14, **dadurch gekennzeichnet, dass** die Dicarboxylsäure der Formel (V) aus der Benzen-1,4-dicarboxylsäure, der 2-Amino-benzen-1,4-dicarboxylsäure, der 2-Nitro-benzen-1,4-dicarboxylsäure, der 2-Chlor-benzen-1,4-dicarboxylsäure, der 2-Brom-benzen-1,4-dicarboxylsäure, der 2,5-Dihydroxy-benzen-1,4-dicarboxylsäure, der 2-Methyl-benzen-1,4-dicarboxylsäure, der 2,5-Dimethyl-benzen-1,4-dicarboxylsäure, der Diphenyl-4,4'-dicarboxylsäure, der Diphenyl-3,3'-dicarboxylsäure, der 4,4'-Diazen-1,2-diyldibenzoesäure, der 3,3'-Diazen-1,2-diyldibenzoesäure, der Naphtalen-2,6-dicarboxylsäure, der Naphtalene-1,5-dicarboxylsäure, der 1,4-Phenyldiacetatsäure, der 1,4-Phenyldiacrylsäure und der 4,4'-Benzophenon-dicarboxylsäure ausgewählt ist.

16. Verfahren nach Anspruch 15, **dadurch gekennzeichnet, dass** die Dicarboxylsäure der Formel (V) aus der Benzen-1,4-dicarboxylsäure, der 2,5-Dihydroxy-benzen-1,4-dicarboxylsäure und der 2-Amino-benzen-1,4-dicarboxylsäure ausgewählt ist.

17. Verfahren nach einem der Ansprüche 11 bis 16, **dadurch gekennzeichnet, dass** im Reaktionsgemisch das molare Verhältnis Titanalcoxyd der Formel (III) oder Titanoxokomplex der Formel (IV) / Dicarboxylsäure der Formel (V) von 0,1 bis 2 schwankt.

18. Verfahren nach einem der Ansprüche 11 bis 17, **dadurch gekennzeichnet, dass** die polaren Lösungsmittel, die während des fünften Schritts verwendet werden, aus dem Gemischen von mindestens zwei organischen Lösungsmitteln S1 und S2 ausgewählt sind, die mindestens ein Lösungsmittel S1 umfassen, das aus den C₁-C₄-Alkoholen, dem Benzylalkohol und dem Chlorbenzylalkohol ausgewählt ist und mindestens ein Lösungsmittel S2, das aus dem N,N-Dimethylformamid, dem N,N-Diethylformamid, dem Dimethylsulfoxid, dem Ethylenglycol, dem Dioxan, dem Acetonitril, dem Aceton, dem Tetrahydrofuran, dem Pyridin und dem N-Methylpyrrolidon ausgewählt ist.

19. Verfahren nach einem der Ansprüche 11 bis 18, **dadurch gekennzeichnet, dass** die Dicarboxylsäuren der Formel (VI) aus der Thiophen-2,5-dicarboxylsäure, der Pyridin-2,6-dicarboxylsäure und der Pyrazin-2,6-dicarboxylsäure ausgewählt sind.

20. Verfahren nach einem der Ansprüche 11 bis 19, **dadurch gekennzeichnet, dass** das molare Verhältnis festes Material, resultierend aus dem vierten Schritt / Dicarboxylsäure der Formel (VI) beim fünften Schritt von 1 bis 20 schwankt.

## Claims

1. An inorganic-organic hybrid solid material based on titanium, **characterized in that** it has a pseudo-cubic crystalline structure and that it is constituted exclusively of units of formula (I) below:
TiₐO_{b}(OH)_{c}[(⁻OOC)-X-#]_{d} (I)
in which:
- X is an organic spacer and represents a saturated or unsaturated, linear or branched, aliphatic chain having 2 to 12 carbon atoms; a monocyclic, bicyclic or tricyclic hydrocarbon-based aromatic group that is unsubstituted or that is substituted by one or more substituents R independently chosen from a halogen atom and amino, nitro, hydroxyl, C₁-C₄ trifluoroalkyl and C₁-C₄ alkyl groups; a benzophenone group; a monocyclic or bicyclic heteroaromatic group in which the ring(s) is(are) 5- or 6-membered ring(s), said group containing at least one heteroatom chosen from nitrogen and sulfur and being unsubstituted or substituted by one or more substituents R independently chosen from a halogen atom and amino, nitro, hydroxyl, C₁-C₄ trifluoroalkyl and C₁-C₄ alkyl groups;
- a and b, which are identical or different, are integers varying from 1 to 16 inclusively;
- c and d, which are identical or different, are integers varying from 1 to 32 inclusively;
- the indices a, b, c and d adhere to the relation 4a = 2b + c + d;
- the titanium atoms form a purely inorganic elementary building block constituted of titanium oxo complexes;
- # is the point through which two units of formula (I) are joined together; # represents a covalent bond between a carbon atom belonging to the spacer X and the carbon atom of a carboxylate group COO- of another unit of formula (I) and in which the two oxygen atoms of the carboxylate group belong respectively to two adjacent octahedral titanium oxo complexes of an elementary building block of said other unit of formula (I);
said units of formula (I) together forming a three-dimensional structure and defining cavities having a free diameter of 4 to 40 Å that are accessible through triangular apertures having dimensions of 4 to 15 Å.

2. The material as claimed in claim 1, **characterized in that** the aliphatic chains defined for X are chosen from C₁-C₄ alkyl chains and C₂-C₄ alkene or alkyne chains.

3. The material as claimed in claim 1 or 2, **characterized in that** the hydrocarbon-based groups defined for X are chosen from phenylene; chlorophenylene; bromophenylene; aminophenylene; nitrophenylene; mono-, di- or tetramethylphenylene; mono- or diethenylphenylene; mono- or dihydroxyphenylene; biphenylene; diphenyldiazene; naphthalene and anthracene groups.

4. The material as claimed in claim 1 or 2, **characterized in that** the heterocycles defined for X are chosen from thiophene, bithiophene, pyridine, bipyridine and pyrazine rings.

5. The material as claimed in claim 1 or 2, **characterized in that** the subunit [-OOC-X-#] is chosen from the groups of formulae (II-1) to (II-13) below: 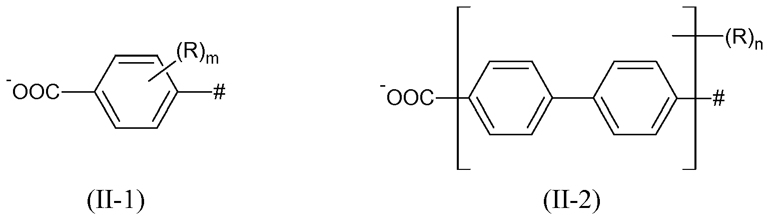 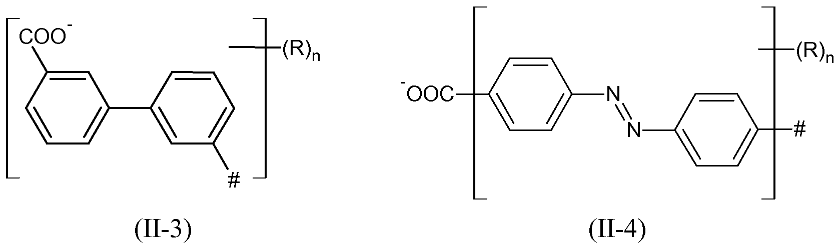 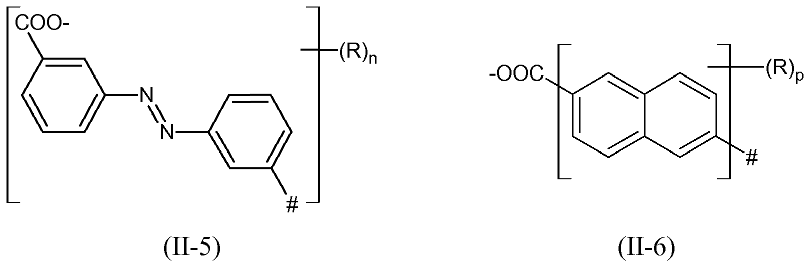 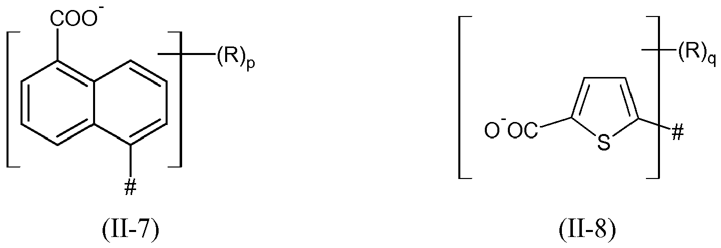 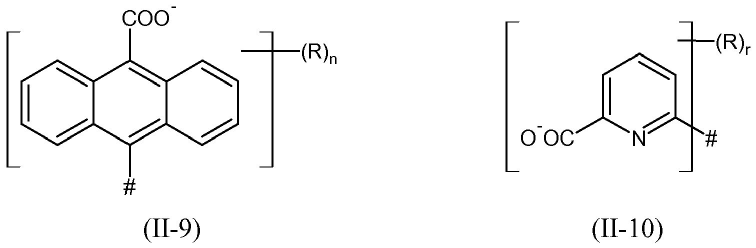 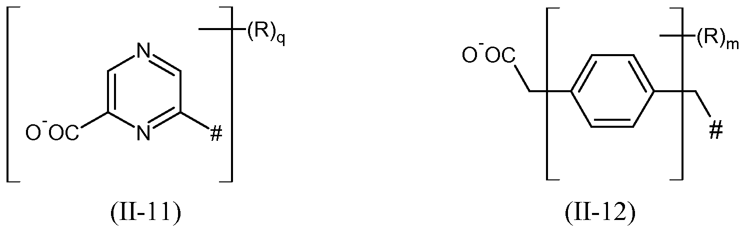 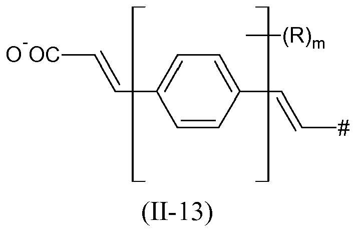 in which:
- R is a halogen atom, an amino, nitro, hydroxyl, C₁-C₄ trifluoroalkyl or C₁-C₄ alkyl group;
- m is an integer ranging from 0 to 4;
- n is an integer ranging from 0 to 8;
- p is an integer ranging from 0 to 6;
- q is an integer ranging from 0 to 2; and
- r is an integer ranging from 0 to 3.

6. The material as claimed in claim 5, **characterized in that** the subunit [-OOC-X-#] is chosen from phenyl-1-carboxylate, phenyl-2-amino-1-carboxylate, phenyl-2,5-dihydroxy-1-carboxylate and thiophene-2-carboxylate.

7. The material as claimed in claim 1, **characterized in that** the units of formula (I) are chosen from the subunits of formula (I-1) below:
Ti₈O₈(OH)₄[(⁻OOC)-X-#]₁₂ (I-1)
in which:
- X and # are as defined above in claim 1;
- the titanium atoms form a purely inorganic elementary building block constituted of 8 octahedral titanium oxo complexes each comprising a central titanium atom surrounded by 6 oxygen atoms, said octahedral titanium oxo complexes being joined together either by a common edge, or by a common apex, in both cases by means of oxo-O- or hydroxo-OH- bridges; said building blocks being connected together in the three dimensions of space by organic spacers X; it being understood that each of the building blocks is connected to 12 organic spacers by means of carboxylate groups COO- in which each of the two oxygen atoms is an integral part of two adjacent titanium oxo complexes.

8. The material as claimed in any one of the preceding claims, **characterized in that** the cavities have a free diameter of 5 to 12.6 Å.

9. The material as claimed in any one of the preceding claims, **characterized in that** it has a BET specific surface area of 200 to 6000 m²/g.

10. The material as claimed in any one of the preceding claims, **characterized in that** it has a pore volume of 0.1 to 3 cm³/g.

11. The use of a material as defined in any one of the preceding claims, as a catalyst support for carrying out heterogeneously catalyzed chemical reactions or as a gas storage/separation/purification material or as a matrix for encapsulating active principles (medicaments, cosmetics) or else as a photochromic material for information storage, laser printing or as an oxygen indicator.

12. A process for preparing an inorganic-organic hybrid solid material based on titanium as defined in any one of claims 1 to 10, **characterized in that** it comprises the following steps:
1) in a first step, a reaction mixture is prepared comprising:
i) at least one titanium precursor chosen from titanium alkoxides of formula (III) below:
Ti(OR₁)₄ (III)
in which R₁ is a linear or branched alkyl radical comprising from 1 to 4 carbon atoms or at least one titanium oxo complex of formula (IV) below:
TiₓO_{y}(OR₂)_{z}(OCR₃)_{w} (IV)
in which:
- R₂ represents a hydrogen atom, a linear or branched C₁-C₆ alkyl radical or a phenyl ring optionally substituted by one or more radicals chosen from a halogen atom, C₁-C₄ alkyl and C₂-C₃ alkene radical;
- R₃ represents a linear or branched C₁-C₄ alkyl radical, a C₁-C₄ trihaloalkyl radical or a phenyl ring;
- x is an integer ranging from 2 to 18;
- y is an integer ranging from 1 to 27;
- z is an integer ranging from 0 to 32;
- w is an integer ranging from 0 to 16;
and in which the titanium atoms form an elementary building block constituted of a purely inorganic core of titanium oxo complexes in octahedral coordination each comprising a central titanium atom surrounded by 6 oxygen atoms, said octahedral titanium oxo complexes being joined together either by a common edge, or by a common apex, in both cases by means of oxo-O- or hydroxo-OH-bridges; said building blocks being surrounded by organic ligands of alcoholate (OR₂) and/or carboxylate (OOCR₃) type;
ii) at least one dicarboxylic acid of formula (V) below:
HOOC-X'-COOH (V)
in which X' represents a saturated or unsaturated, linear or branched, aliphatic chain having from 2 to 12 carbon atoms, a benzophenone group or a monocyclic, bicyclic or tricyclic hydrocarbon-based aromatic group that is unsubstituted or that is substituted by one or more substituents R' independently chosen from a halogen atom and amino, nitro, hydroxyl, C₁-C₄ trifluoroalkyl and C₁-C₄ alkyl groups;
iii) a mixture of at least two organic solvents comprising at least one solvent S1 chosen from C₁-C₄ alcohols, benzyl alcohol and chlorobenzyl alcohol, and at least one solvent S2 chosen from N,N-dimethylformamide, N,N-diethylformamide, dimethylsulfoxide, ethylene glycol, dioxane, acetonitrile, acetone, tetrahydrofuran, pyridine and N-methylpyrrolidone;
2) in a second step, the reaction mixture thus obtained is brought to a temperature of 70 to 200°C, for 4 to 72 hours, until a precipitate corresponding to the expected solid material is obtained; then
3) in a third step, the reaction mixture is cooled to ambient temperature;
4) in a fourth step, the solid material is separated from the mixture of organic solvents;
it being understood that when the solid material is constituted of units of formula (I) in which X is a monocyclic or bicyclic heteroaromatic group in which the ring(s) is(are) optionally substituted 5- or 6-membered ring(s), said group containing at least one heteroatom chosen from nitrogen and sulfur, then said process also comprises the following additional steps:
5) a fifth step of preparing a dispersion of the solid material resulting from the fourth step in at least one polar organic solvent, in the presence of at least one dicarboxylic acid of formula (VI) below:
HOOC-X"-COOH (VI)
in which X" represents a monocyclic or bicyclic heteroaromatic group in which the ring(s) is(are) 5- or 6-membered ring(s), said group containing at least one heteroatom chosen from nitrogen and sulfur and being unsubstituted or substituted by one or more substituents R independently chosen from a halogen atom and amino, nitro, hydroxyl, C₁-C₄ trifluoroalkyl and C₁-C₄ alkyl groups;
6) a sixth step, during which the dispersion thus obtained is brought to a temperature of 100 to 150°C for a time of 4 hours to 4 days, which leads to the formation of a precipitate corresponding to the expected solid material; then
7) a seventh step during which the temperature is allowed to return to ambient temperature; and
8) an eighth step of separating the solid material thus obtained from the organic solvent(s).

13. The process as claimed in claim 12, **characterized in that** the precursors of formula (III) are chosen from titanium ethoxide, titanium isopropoxide, titanium n-propoxide and titanium butoxide.

14. The process as claimed in claim 12 or 13, **characterized in that** the titanium oxo complexes of formula (IV) are chosen from Ti₁₆O₁₆(OCH₂CH₃)₃₂ and Ti₈O₈(OOCR₃)₁₆ in which R₃ is as defined in claim 12.

15. The process as claimed in any one of claims 12 to 14, **characterized in that** the dicarboxylic acid of formula (V) is chosen from benzene-1,4-dicarboxylic acid, 2-aminobenzene-1,4-dicarboxylic acid, 2-nitrobenzene-1,4-dicarboxylic acid, 2-chlorobenzene-1,4-dicarboxylic acid, 2-bromobenzene-1,4-dicarboxylic acid, 2,5-dihydroxybenzene-1,4-dicarboxylic acid, 2-methylbenzene-1,4-dicarboxylic acid, 2,5-dimethylbenzene-1,4-dicarboxylic acid, diphenyl-4,4'-dicarboxylic acid, diphenyl-3,3'-dicarboxylic acid, 4,4'-(diazene-1,2-diyl)dibenzoic acid, 3,3'-(diazene-1,2-diyl)dibenzoic acid, naphthalene-2,6-dicarboxylic acid, naphthalene-1,5-dicarboxylic acid, 1,4-phenylenediacetic acid, 1,4-phenylenediacrylic acid and 4,4'-benzophenonedicarboxylic acid.

16. The process as claimed in claim 15, **characterized in that** the dicarboxylic acid of formula (V) is chosen from benzene-1,4-dicarboxylic acid, 2,5-dihydroxybenzene-1,4-dicarboxylic acid and 2-aminobenzene-1,4-dicarboxylic acid.

17. The process as claimed in any one of claims 11 to 16, **characterized in that** within the reaction mixture, the titanium alkoxide of formula (III) or titanium oxo complex of formula (IV)/dicarboxylic acid of formula (V) molar ratio varies from 0.1 to 2.

18. The process as claimed in any one of claims 11 to 17, **characterized in that** the polar solvents used during the fifth step are chosen from mixtures of at least two organic solvents and S2 comprising at least one solvent chosen from C₁-C₄ alcohols, benzyl alcohol and chlorobenzyl alcohol, and at least one solvent S2 chosen from N,N-dimethylformamide, N,N-diethylformamide, dimethylsulfoxide, ethylene glycol, dioxane, acetonitrile, acetone, tetrahydrofuran, pyridine and N-methylpyrrolidone.

19. The process as claimed in any one of claims 11 to 18, **characterized in that** the dicarboxylic acids of formula (VI) are chosen from thiophene-2,5-dicarboxylic acid, pyridine-2,6-dicarboxylic acid and pyrazine-2,6-dicarboxylic acid.

20. The process as claimed in any one of claims 11 to 19, **characterized in that** the solid material resulting from the fourth step/dicarboxylic acid of formula (VI) molar ratio during the fifth step varies from 1 to 20.
